# EUROPEAN PATENT APPLICATION

(11) **EP 3 843 457 A1**
(43) Date of publication of application: **30.06.2021**
(21) Application number: 19855852.0
(22) Date of filing: 30.08.2019
(51) Int. Cl.: H04W 36/00

(54) **DATA TRANSMISSION METHOD, RADIO ACCESS NETWORK DEVICE, AND TERMINAL DEVICE**

(30) Priority: 31.08.2018 CN 201811011314
(71) Applicant: HUAWEI TECHNOLOGIES CO., LTD., Shenzhen, Guangdong 518129 (CN)
(72) Inventor: ZHUO, Yibin, Shenzhen, Guangdong 518129 (CN); WANG, Jun, Shenzhen, Guangdong 518129 (CN); PENG, Wenjie, Shenzhen, Guangdong 518129 (CN); DAI, Mingzeng, Shenzhen, Guangdong 518129 (CN); FAN, Qiang, Shenzhen, Guangdong 518129 (CN)
(74) Representative: Gill Jennings & Every LLP
(86) International application number: PCT/CN2019/103777
(87) International publication number: WO 2020/043197

(57) **Abstract**

Embodiments of this application disclose a data transmission method, a radio access network device, and a terminal device, to improve reliability of data transmission of a terminal device in a handover process and improve communication efficiency. The embodiments of this application provide a data transmission method, including: receiving, by a first radio access network device, traffic model information of a first terminal device that is sent by the first terminal device; sending, by the first radio access network device, the traffic model information of the first terminal device to a second radio access network device; receiving, by the first radio access network device, first resource configuration information sent by the second radio access network device, where the first resource configuration information includes a transmission resource required by the first terminal device to transmit data on a sidelink in a handover process; and sending, by the first radio access network device, a configuration message to the first terminal device, where the configuration message includes the first resource configuration information, or second resource configuration information generated by the first radio access network device based on first resource configuration information.

## Description

This application claims priority to Chinese Patent Application No. 201811011314.6, filed with the China National Intellectual Property Administration on August 31, 2018 and entitled "DATA TRANSMISSION METHOD, RADIO ACCESS NETWORK DEVICE, AND TERMINAL DEVICE", which is incorporated herein by reference in its entirety.

### TECHNICAL FIELD

This application relates to the field of communications technologies, and in particular, to a data transmission method, a radio access network device, and a terminal device.

### BACKGROUND

Vehicle-to-everything (vehicle to everything, V2X) is considered as one of the most promising fields with clearest market requirements in the internet of things system. V2X features wide application space, great industry potential, and strong social benefits, and is of great significance to promote the innovation and development of the automobile and information communication industry, build new models and new forms of automobile and transportation services, promote the innovation and application of autonomous driving technologies, and improve traffic efficiency and safety. In vehicle to everything, vehicle information is provided via vehicle-mounted sensors and vehicle-mounted terminals, and vehicle to vehicle (vehicle to vehicle, V2V), vehicle to pedestrian (vehicle to pedestrian, V2P), and vehicle to infrastructure (vehicle to infrastructure) communication is implemented through various communications technologies. V2V is a main scenario that is discussed.

With the development of mobile communication, emerging services have stricter latency and reliability requirements on mobile systems. How to meet the requirements for low latency and high reliability is one of the hot topics in the discussion of various communications systems. A sidelink (sidelink, SL) is a communication link for direct communication between vehicles, and an air interface for direct communication between vehicles is defined as a PC5 interface. In a V2X handover procedure provided in the current technology, after vehicle user equipment (vehicle user equipment, V-UE) is handed over to a new cell, the vehicle user equipment needs to re-measure an SL status and perform resource configuration, increasing a transmission delay after the V-UE is handed over, and reducing communication efficiency.

### SUMMARY

Embodiments of this application provide a data transmission method, a radio access network device, and a terminal device, to reduce a transmission delay of a terminal device after a handover, improve reliability of data transmission of the terminal device in a handover process, and improve communication efficiency.

To resolve the foregoing problem, the embodiments of this application provide the following technical solutions.

According to a first aspect, an embodiment of this application provides a data transmission method, applied to a first radio access network device and including: The first radio access network device receives traffic model information of a first terminal device that is sent by the first terminal device. The first radio access network device sends the traffic model information of the first terminal device to a second radio access network device. The first radio access network device receives first resource configuration information sent by the second radio access network device, where the first resource configuration information includes a transmission resource required by the first terminal device to transmit data on a sidelink SL in a handover process, the handover process is a process in which the first terminal device is handed over from the first radio access network device to the second radio access network device, and the sidelink is a communication link between the first terminal device and a second terminal device. The first radio access network device sends a configuration message to the first terminal device. The configuration message includes the first resource configuration information; or the configuration message includes second resource configuration information generated by the first radio access network device based on the first resource configuration information, and the second resource configuration information includes the transmission resource required by the first terminal device to transmit data on the sidelink in the handover process.

In this embodiment of this application, the first radio access network device may send the traffic model information of the first terminal device to the second radio access network device, so that the second radio access network device can determine, based on the traffic model information of the first terminal device, the transmission resource required by the first terminal device to transmit data on the SL in the handover process. The second radio access network device sends, to the first radio access network device, the first resource configuration information carrying the transmission resource, and the first radio access network device may send the configuration message to the first terminal device. In this way, the first terminal device can obtain, by using the configuration message, the transmission resource determined by the second radio access network device, and the first terminal device transmits data to the second terminal device by using the transmission resource. In this embodiment of this application, the second radio access network device determines, for the first terminal device based on the traffic model information of the first terminal device, the transmission resource required for transmitting data on the SL in the handover process, so that the first terminal device can perform data transmission with the second terminal device by using the transmission resource, thereby reducing a transmission delay of the terminal device after the handover, improving reliability of data transmission of the terminal device in the handover process, and improving communication efficiency.

In a possible implementation of the first aspect, the method further includes any one or more of the following operations: The first radio access network device sends, to the second radio access network device, information about a frequency supported by the first terminal device. Alternatively, the first radio access network device sends, to the second radio access network device, a channel busy ratio CBR measurement result generated by the first terminal device. Alternatively, the first radio access network device sends location information of the first terminal device to the second radio access network device. Alternatively, the first radio access network device sends inter-node synchronization information to the second radio access network device, where the inter-node synchronization information is used to indicate information about a system frame number SFN offset between the first radio access network device and the second radio access network device. Alternatively, the first radio access network device sends network standard request information to the second radio access network device, where the network standard request information is used to request a network standard corresponding to the transmission resource from the second radio access network device.

In the foregoing embodiment of this application, the information about the frequency supported by the first terminal device may be reported to the first radio access network device by using RRC signaling. For example, the information about the frequency supported by the first terminal device may be reported to the first radio access network device by using sidelink terminal information in the RRC signaling. The first terminal device may further generate the CBR measurement result. The CBR measurement result is a result obtained after the first terminal device monitors a busy/idle status of a time-frequency resource, and may be used to assist the second radio access network device in transmission resource configuration. The location information of the first terminal device is a current geographical location of the first terminal device, and the location information of the first terminal device is used by the second radio access network device to allocate a transmission resource to the first terminal device. The inter-node synchronization information is used to indicate the information about the system frame number offset between the first radio access network device and the second radio access network device. That is, the inter-node synchronization information is used to indicate a synchronization time offset between the two radio access network devices. The first terminal device may proactively send the inter-node synchronization information to the first radio access network device. The first terminal device may further generate the network standard request information, and send the network standard request information to the first radio access network device, where the network standard request information is used to request the network standard corresponding to the transmission resource from the second radio access network device. The second radio access network device may further indicate the network standard corresponding to the transmission resource determined for the first terminal device, the network standard corresponding to the transmission resource. The second radio access network device indicates the network standard corresponding to the transmission resource. In addition, when performing RRC reconfiguration on the first terminal device, the first radio access network device also needs to further indicate the standard in which the configured transmission resource is used. Therefore, when receiving the transmission resource, the first terminal device performs adaptation by using a corresponding sending parameter.

In a possible implementation of the first aspect, any one or more of the following information is carried in a handover request: the traffic model information, the information about the frequency supported by the first terminal device, the CBR measurement result, the location information of the first terminal device, the inter-node synchronization information, or the network standard request information; and the handover request is sent by the first radio access network device to the second radio access network device.

In the foregoing embodiment of this application, the first terminal device sends a measurement report to the first radio access network device to trigger the handover, and the first radio access network device determines, based on the measurement report reported by the first terminal device, to start a handover procedure. The first radio access network device sends the handover request to the second radio access network device, where the handover request carries any one or more of the following information: the traffic model information, the information about the frequency supported by the first terminal device, the CBR measurement result, the location information of the first terminal device, the inter-node synchronization information, or the network standard request information. The first radio access network device may send, to the second radio access network device by using the handover request, any one or more of the following information to be carried in the handover request: the traffic model information of the first terminal device, the information about the frequency supported by the first terminal device, the CBR measurement result, the location information of the first terminal device, the inter-node synchronization information, or the network standard request information.

In a possible implementation of the first aspect, the method further includes: The first radio access network device receives network standard indication information sent by the second radio access network device, where the network standard indication information is used to indicate the network standard corresponding to the transmission resource. Alternatively, the first radio access network device receives third resource configuration information sent by the second radio access network device, where the third resource configuration information includes at least one of the following information: carrier aggregation CA configuration information or duplication configuration information.

In the foregoing embodiment of this application, the second radio access network device may further indicate the network standard corresponding to the transmission resource determined for the first terminal device. For example, when the second radio access network device sends an HO ACK to the first radio access device, and the HO ACK carries resource configuration information of a target cell, the second radio access network device needs to further indicate whether the transmission resource is used in an LTE standard or an NR standard. The second radio access network device may send the network standard indication information to the first radio access network device. Therefore, the first radio access network device may obtain the network standard indication information from the second radio access network device. The second radio access network device sends the third resource configuration information to the first radio access network device, where the third resource configuration information includes the CA configuration information and/or the duplication configuration information. Therefore, the first radio access network device can obtain the third resource configuration information from the second radio access network device, and the first radio access network device can obtain the CA configuration information and the duplication configuration information that are generated by the second radio network device.

According to a second aspect, an embodiment of this application provides a data transmission method, including: A second radio access network device receives traffic model information of a first terminal device that is sent by a first radio access network device. The second radio access network device determines, based on the traffic model information of the first terminal device, a transmission resource required by the first terminal device to transmit data on a sidelink SL in a handover process, where the handover process is a process in which the first terminal device is handed over from the first radio access network device to the second radio access network device, and the sidelink is a communication link between the first terminal device and a second terminal device. The second radio access network device sends first resource configuration information to the first radio access network device, where the first resource configuration information includes the transmission resource.

In this embodiment of this application, the second radio access network device may determine, based on the traffic model information of the first terminal device, the transmission resource required by the first terminal device to transmit data on the SL in the handover process, and the second radio access network device sends, to the first radio access network device, the first resource configuration information carrying the transmission resource. The first radio access network device may send a configuration message to the first terminal device. In this way, the first terminal device can obtain, by using the configuration message, the transmission resource determined by the second radio access network device, and the first terminal device transmits data to the second terminal device by using the transmission resource. In this embodiment of this application, the second radio access network device determines, for the first terminal device based on the traffic model information of the first terminal device, the transmission resource required for transmitting data on the SL in the handover process, so that the first terminal device can perform data transmission with the second terminal device by using the transmission resource, thereby reducing a transmission delay of the terminal device after the handover, improving reliability of data transmission of the terminal device in the handover process, and improving communication efficiency.

In a possible implementation of the second aspect, the method further includes: The second radio access network device receives information that is about a frequency supported by the first terminal device and that is sent by the first radio access network device. Alternatively, the second radio access network device receives a channel busy ratio CBR measurement result that is generated by the first terminal device and that is sent by the first radio access network device. Alternatively, the second radio access network device receives location information of the first terminal device that is sent by the first radio access network device. Alternatively, the second radio access network device receives inter-node synchronization information sent by the first radio access network device, where the inter-node synchronization information is used to indicate information about a system frame number SFN offset between the first radio access network device and the second radio access network device. Alternatively, the second radio access network device receives network standard request information sent by the first radio access network device, where the network standard request information is used to request a network standard corresponding to the transmission resource from the second radio access network device.

In a possible implementation of the second aspect, the method further includes: The second radio access network device configures a carrier for the first terminal device based on the information about the frequency supported by the first terminal device. Alternatively, the second radio access network device determines a location of the transmission resource for the first terminal device based on the CBR measurement result. Alternatively, the second radio access network device determines, for the first terminal device based on the location information of the first terminal device, a resource location corresponding to an area in which the first terminal device is located. Alternatively, the second radio access network device corrects a time domain location of the transmission resource based on the inter-node synchronization information.

In the foregoing embodiment of this application, the second radio access network device may obtain the information about the frequency supported by the first terminal device, and the second radio access network device parses the information about the frequency supported by the first terminal device, and then determines carrier information corresponding to the data transmission of the terminal device. The second radio access network device may obtain the CBR measurement result, and the second radio access network device determines an idle/busy status of a time-frequency resource by parsing the CBR measurement result, to determine, for the first terminal device based on the CBR measurement result, a time-frequency resource corresponding to the data transmission. The second radio access network device may obtain the location information of the first terminal device, and then determine a time-frequency resource corresponding to a geographical area in which the first terminal device is located. The second radio access network device may obtain the inter-node synchronization information, and then correct the time domain location of the transmission resource based on the inter-node synchronization information. This is not limited thereto. In some other embodiments of this application, the second radio access network device may not correct the time domain location of the transmission resource, but the first radio access network device corrects the time domain location of the transmission resource based on the inter-node synchronization information. The second radio access network device may obtain the network standard request information by using the first radio access network device, and the second radio access network device may further indicate the network standard corresponding to the transmission resource determined for the first terminal device.

In a possible implementation of the second aspect, the method further includes: The second radio access network device sends network standard indication information to the first radio access network device, where the network standard indication information is used to indicate the network standard corresponding to the transmission resource. Alternatively, the second radio access network device sends third resource configuration information to the first radio access network device, where the third resource configuration information includes at least one of the following information: carrier aggregation CA configuration information or duplication configuration information.

In the foregoing embodiment of this application, the second radio access network device may obtain the network standard request information, and the second radio access network device may further indicate the network standard corresponding to the transmission resource determined for the first terminal device. The second radio access network device needs to indicate the network standard corresponding to the transmission resource. In addition, when performing RRC reconfiguration on the first terminal device, the first radio access network device also needs to further indicate the standard in which the configured transmission resource is used. Therefore, when receiving the transmission resource, the first terminal device performs adaptation by using a corresponding sending parameter. The second radio access network device may further generate the CA configuration information and the duplication (duplication) configuration information for the first terminal device. For example, the second radio access network device may obtain the information about the frequency supported by the first terminal device, to configure, based on the information about the frequency supported by the first terminal device, a carrier used during CA, and to generate the CA configuration information. For another example, the second radio access network device may generate the duplication configuration information based on a traffic reliability requirement of the first terminal device. For example, the second radio access network device may obtain PPPR information generated by the first terminal device, and the PPPR information may assist the second radio access network device in determining whether to use duplication. For example, duplication is used when PPPR is lower than a specific value. The second radio access network device sends the third resource configuration information to the first radio access network device, where the third resource configuration information includes the CA configuration information and the duplication configuration information. According to a third aspect, an embodiment of this application provides a data transmission method, including: A first terminal device sends traffic model information of the first terminal device to a first radio access network device. The first terminal device receives a configuration message sent by the first radio access network device, where the configuration message includes first resource configuration information; or the configuration message includes second resource configuration information generated by the first radio access network device based on the first resource configuration information, where the first resource configuration information includes a transmission resource required by the first terminal device to transmit data on a sidelink SL in a handover process, the handover process is a process in which the first terminal device is handed over from the first radio access network device to a second radio access network device, and the sidelink is a communication link between the first terminal device and a second terminal device; and the second resource configuration information includes the transmission resource required by the first terminal device to transmit data on the sidelink in the handover process. The first terminal device transmits data to the second terminal device by using the transmission resource.

In this embodiment of this application, the first radio access network device may send the traffic model information of the first terminal device to the second radio access network device, so that the second radio access network device can determine, based on the traffic model information of the first terminal device, the transmission resource required by the first terminal device to transmit data on the SL in the handover process. The second radio access network device sends, to the first radio access network device, the first resource configuration information carrying the transmission resource, and the first radio access network device may send the configuration message to the first terminal device. In this way, the first terminal device can obtain, by using the configuration message, the transmission resource determined by the second radio access network device, and the first terminal device transmits data to the second terminal device by using the transmission resource. In this embodiment of this application, the second radio access network device determines, for the first terminal device based on the traffic model information of the first terminal device, the transmission resource required for transmitting data on the SL in the handover process, so that the first terminal device can perform data transmission with the second terminal device by using the transmission resource, thereby reducing a transmission delay of the terminal device after the handover, improving reliability of data transmission of the terminal device in the handover process, and improving communication efficiency.

In a possible implementation of the third aspect, the method further includes any one or more of the following operations: The first terminal device sends, to the first radio access network device, information about a frequency supported by the first terminal device. Alternatively, the first terminal device sends, to the first radio access network device, a channel busy ratio CBR measurement result generated by the first terminal device. Alternatively, the first terminal device sends location information of the first terminal device to the first radio access network device. Alternatively, the first terminal device sends inter-node synchronization information to the first radio access network device, where the inter-node synchronization information is used to indicate information about a system frame number SFN offset between the first radio access network device and the second radio access network device. Alternatively, the first terminal device sends network standard request information to the first radio access network device, where the network standard request information is used to request a network standard corresponding to the transmission resource from the second radio access network device.

In the foregoing embodiment of this application, the information about the frequency supported by the first terminal device may be reported to the first radio access network device by using RRC signaling. For example, the information about the frequency supported by the first terminal device may be reported to the first radio access network device by using sidelink terminal information in the RRC signaling. The first terminal device may further generate the CBR measurement result. The CBR measurement result is a result obtained after the first terminal device monitors a busy/idle status of a time-frequency resource, and may be used to assist the second radio access network device in transmission resource configuration. The location information of the first terminal device is a current geographical location of the first terminal device, and the location information of the first terminal device is used by the second radio access network device to allocate a transmission resource to the first terminal device. The inter-node synchronization information is used to indicate the information about the system frame number offset between the first radio access network device and the second radio access network device. That is, the inter-node synchronization information is used to indicate a synchronization time offset between the two radio access network devices. The first terminal device may proactively send the inter-node synchronization information to the first radio access network device. The first terminal device may further generate the network standard request information, and send the network standard request information to the first radio access network device, where the network standard request information is used to request the network standard corresponding to the transmission resource from the second radio access network device. The second radio access network device may further indicate the network standard corresponding to the transmission resource determined for the first terminal device. The second radio access network device indicates the network standard corresponding to the transmission resource. In addition, when performing RRC reconfiguration on the first terminal device, the first radio access network device also needs to further indicate the standard in which the configured transmission resource is used. Therefore, when receiving the transmission resource, the first terminal device performs adaptation by using a corresponding sending parameter.

In a possible implementation of the third aspect, the method further includes: The first terminal device receives network standard indication information sent by the first radio access network device, where the network standard indication information is used to indicate the network standard corresponding to the transmission resource. Alternatively, the first terminal device receives third resource configuration information sent by the first radio access network device, where the third resource configuration information includes at least one of the following information: carrier aggregation CA configuration information or duplication configuration information.

In the foregoing embodiment of this application, the first terminal device sends the network standard request information. After the first radio access network device forwards the network standard request information, the second radio access network device receives the network standard request information. The second radio access network device may further indicate the network standard corresponding to the transmission resource determined for the first terminal device. In addition, when performing RRC reconfiguration on the first terminal device, the first radio access network device also needs to further indicate the standard in which the configured transmission resource is used. The first terminal device may receive the network standard indication information through forwarding by the first radio access network device. Therefore, when receiving the transmission resource, the first terminal device performs adaptation by using a corresponding sending parameter. The second radio access network device sends the third resource configuration information to the first radio access network device, and the first radio access network device forwards the third resource configuration information, so that the first terminal device obtains the third resource configuration information, where the third resource configuration information includes the CA configuration information and the duplication configuration information. Therefore, the first terminal device determines, by parsing the CA configuration information, CA determined by the second radio access network device, and determines, by parsing the duplication configuration information, whether to enable duplication.

In a possible implementation of the third aspect, That the first terminal device transmits data to the second terminal device by using the transmission resource includes: When the first terminal device uses a mode 3 for transmission, the first terminal device transmits data to the second terminal device by using the transmission resource from a moment at which the configuration message is received by the first terminal device to a moment at which a cell to which the first terminal device is handed over is reconfigured. Alternatively, when the first terminal device uses a mode 4 for transmission, the first terminal device transmits data to the second terminal device by using the transmission resource from a moment at which the configuration message is received by the first terminal device to a moment at which a sensed resource is obtained by the first terminal device. In a process of implementing mutual communication between vehicles, two communication modes are defined in the V2V scenario: a mode 3 and a mode 4. The mode 3 may be understood as that a process of communication between vehicles is controlled by a base station, and a transmit-end vehicle sends a control signal and a data signal on a resource scheduled by the base station. In the mode 4, a sending resource of a transmit-end vehicle is not controlled by a base station. Instead, the transmit-end vehicle searches for an appropriate resource by sensing (sensing) a busy/idle status of a channel, to send data. If the first terminal device is configured to use the mode 3 for transmission in a target cell, the first terminal device sends data by using a transmission resource of a source cell from a moment at which configuration information is received by the first terminal device to a moment at which RRC reconfiguration is performed on the target cell. If the first terminal device is configured to use the mode 4 for transmission in a target cell, the first terminal device sends data by using a transmission resource of a source cell from a moment at which configuration information is received by the first terminal device to a moment at which the sensed resource is obtained by the first terminal device.

In a possible implementation of the first aspect, the second aspect, or the third aspect, a communication connection is established between the first radio access network device and a core network device, and a communication connection is established between the second radio access network device and the core network device; and information is forwarded between the first radio access network device and the second radio access network device by using the core network device.

In a possible implementation of the first aspect, the second aspect, or the third aspect, the traffic model information includes any one or more of the following information: traffic period information, information about a time offset of traffic relative to a system frame number, sidelink data packet priority PPPP information, sidelink data packet reliability PPPR information, or traffic packet size information.

In a possible implementation of the second aspect, That the second radio access network device determines, based on the traffic model information of the first terminal device, a transmission resource required by the first terminal device to transmit data on a sidelink SL in a handover process includes: The second radio access network device determines a resource period of the transmission resource based on the traffic period information. Alternatively, the second radio access network device determines a time domain location of the transmission resource relative to a start system frame number based on the information about the time offset of the traffic relative to the system frame number. Alternatively, the second radio access network device determines, based on the PPPP information, a priority of data carried on the transmission resource. Alternatively, the second radio access network device determines, based on the PPPR information, a reliability requirement corresponding to the transmission resource and channel quality corresponding to the transmission resource. Alternatively, the second radio access network device determines, based on the traffic packet size information, an amount of traffic data carried on the transmission resource.

In the foregoing embodiment of this application, the traffic period information is a transmission period of traffic transmitted by the first terminal device. The second radio access network device may determine the resource period of the transmission resource based on the traffic period information, and a periodically configured transmission resource may be used for periodically transmitted traffic. The information about the time offset of the traffic relative to the SFN is a time offset of the traffic transmitted by the first terminal device relative to a fixed SFN. To be specific, the information about the time offset of the traffic relative to the SFN indicates an arrival moment of the traffic transmitted by the first terminal device. The second radio access network device may determine the time domain location of the transmission resource relative to the start system frame number based on the information about the time offset of the traffic relative to the system frame number, so that the transmission resource determined by the second radio access network device can be correctly obtained by the first terminal device through parsing. A PPPP and PPPR respectively represent a priority requirement and a relative reliability requirement, in time, of the traffic transmitted by the first terminal device. The second radio access network device may determine, based on the PPPP information, the priority of the data carried on the transmission resource, so that data with different priorities is transmitted by using different transmission resources. The PPPP information may be further used to process scheduling priorities of different terminal devices. The second radio access network device may further determine, based on the PPPR information, the reliability requirement corresponding to the transmission resource and the channel quality corresponding to the transmission resource, to ensure that the second radio access network device selects transmission resources with appropriate channel quality for data that is with different PPPR requirements and that is of the first terminal device. A traffic packet size is a data amount of the traffic transmitted by the first terminal device. The second radio access network device may determine, based on the traffic packet size information, the amount of the traffic data carried on the transmission resource, to configure an appropriate quantity of resources for the terminal device. This prevents a transmission failure caused by an oversized traffic packet.

According to a fourth aspect, an embodiment of this application further provides a radio access network device, where the radio access network device is specifically a first radio access network device, and the first radio access network device includes: a receiving module, configured to receive traffic model information of a first terminal device that is sent by the first terminal device; a sending module, configured to send the traffic model information of the first terminal device to a second radio access network device, where the receiving module is configured to receive first resource configuration information sent by the second radio access network device; and a processing module, configured to determine, based on the first resource configuration information, a transmission resource required by the first terminal device to transmit data on a sidelink SL in a handover process, where the handover process is a process in which the first terminal device is handed over from the first radio access network device to the second radio access network device, and the sidelink is a communication link between the first terminal device and a second terminal device, where the sending module is configured to send a configuration message to the first terminal device. The configuration message includes the first resource configuration information; or the configuration message includes second resource configuration information generated by the first radio access network device based on the first resource configuration information, and the second resource configuration information includes the transmission resource required by the first terminal device to transmit data on the sidelink in the handover process.

In a possible implementation of the fourth aspect, the sending module is further configured to perform any one or more of the following operations: sending, to the second radio access network device, information about a frequency supported by the first terminal device; sending, to the second radio access network device, a channel busy ratio CBR measurement result generated by the first terminal device; sending location information of the first terminal device to the second radio access network device; sending inter-node synchronization information to the second radio access network device, where the inter-node synchronization information is used to indicate information about a system frame number SFN offset between the first radio access network device and the second radio access network device; or sending network standard request information to the second radio access network device, where the network standard request information is used to request a network standard corresponding to the transmission resource from the second radio access network device.

In a possible implementation of the fourth aspect, any one or more of the following information is carried in a handover request: the traffic model information, the information about the frequency supported by the first terminal device, the CBR measurement result, the location information of the first terminal device, the inter-node synchronization information, or the network standard request information; and the handover request is sent by the first radio access network device to the second radio access network device.

In a possible implementation of the fourth aspect, the receiving module is further configured to perform the following operation: receiving network standard indication information sent by the second radio access network device, where the network standard indication information is used to indicate the network standard corresponding to the transmission resource; or receiving third resource configuration information sent by the second radio access network device, where the third resource configuration information includes at least one of the following information: carrier aggregation CA configuration information or duplication configuration information.

In the fourth aspect of this application, the composition modules of the first radio access network device may further perform the steps described in the first aspect and the possible implementations thereof. For details, refer to the descriptions in the first aspect and the possible implementations thereof.

According to a fifth aspect, an embodiment of this application further provides a radio access network device, where the radio access network device is specifically a second radio access network device, and the second radio access network device includes: a receiving module, configured to receive traffic model information of a first terminal device that is sent by a first radio access network device; a processing module, configured to determine, based on the traffic model information of the first terminal device, a transmission resource required by the first terminal device to transmit data on a sidelink SL in a handover process, where the handover process is a process in which the first terminal device is handed over from the first radio access network device to the second radio access network device, and the sidelink is a communication link between the first terminal device and a second terminal device; and a sending module, configured to send first resource configuration information to the first radio access network device, where the first resource configuration information includes the transmission resource.

In a possible implementation of the fifth aspect, the receiving module is further configured to perform any one or more of the following operations: receiving information that is about a frequency supported by the first terminal device and that is sent by the first radio access network device; receiving a channel busy ratio CBR measurement result that is generated by the first terminal device and that is sent by the first radio access network device; receiving location information of the first terminal device that is sent by the first radio access network device; receiving inter-node synchronization information sent by the first radio access network device, where the inter-node synchronization information is used to indicate information about a system frame number SFN offset between the first radio access network device and the second radio access network device; or receiving network standard request information sent by the first radio access network device, where the network standard request information is used to request a network standard corresponding to the transmission resource from the second radio access network device.

In a possible implementation of the fifth aspect, the processing module is further configured to perform any one or more of the following operations: configuring a carrier for the first terminal device based on the information about the frequency supported by the first terminal device; determining a location of the transmission resource for the first terminal device based on the CBR measurement result; determining, for the first terminal device based on the location information of the first terminal device, a resource location corresponding to an area in which the first terminal device is located; or correcting a time domain location of the transmission resource based on the inter-node synchronization information.

In a possible implementation of the fifth aspect, the sending module is further configured to perform the following operation: sending network standard indication information to the first radio access network device, where the network standard indication information is used to indicate the network standard corresponding to the transmission resource; or sending third resource configuration information to the first radio access network device, where the third resource configuration information includes at least one of the following information: carrier aggregation CA configuration information or duplication configuration information.

In the fifth aspect of this application, the composition modules of the second radio access network device may further perform the steps described in the second aspect and the possible implementations thereof. For details, refer to the descriptions in the second aspect and the possible implementations thereof.

According to a sixth aspect, an embodiment of this application further provides a terminal device, where the terminal device is specifically a first terminal device, and the first terminal device includes: a sending module, configured to send traffic model information of the first terminal device to a first radio access network device; a receiving module, configured to receive a configuration message sent by the first radio access network device; and a processing module, configured to determine, based on the configuration message, first resource configuration information, or second resource configuration information generated by the first radio access network device based on the first resource configuration information, where the first resource configuration information includes a transmission resource required by the first terminal device to transmit data on a sidelink SL in a handover process, the handover process is a process in which the first terminal device is handed over from the first radio access network device to a second radio access network device, and the sidelink is a communication link between the first terminal device and a second terminal device; and the second resource configuration information includes the transmission resource required by the first terminal device to transmit data on the sidelink in the handover process, where the sending module is configured to transmit data to the second terminal device by using the transmission resource.

In a possible implementation of the sixth aspect, the sending module is further configured to perform any one or more of the following operations: sending, to the first radio access network device, information about a frequency supported by the first terminal device; sending, to the first radio access network device, a channel busy ratio CBR measurement result generated by the first terminal device; sending location information of the first terminal device to the first radio access network device; sending inter-node synchronization information to the first radio access network device, where the inter-node synchronization information is used to indicate information about a system frame number SFN offset between the first radio access network device and the second radio access network device; or sending network standard request information to the first radio access network device, where the network standard request information is used to request a network standard corresponding to the transmission resource from the second radio access network device. In a possible implementation of the sixth aspect, the receiving module is further configured to perform the following operation: receiving network standard indication information sent by the first radio access network device, where the network standard indication information is used to indicate the network standard corresponding to the transmission resource; or receiving third resource configuration information sent by the first radio access network device, where the third resource configuration information includes at least one of the following information: carrier aggregation CA configuration information or duplication configuration information.

In a possible implementation of the sixth aspect, the sending module is further configured to perform the following operation: when the first terminal device uses a mode 3 for transmission, transmitting data to the second terminal device by using the transmission resource from a moment at which the configuration message is received by the first terminal device to a moment at which a cell to which the first terminal device is handed over is reconfigured; or when the first terminal device uses a mode 4 for transmission, transmitting data to the second terminal device by using the transmission resource from a moment at which the configuration message is received by the first terminal device to a moment at which a sensed resource is obtained by the first terminal device.

In a possible implementation of the fourth aspect, the fifth aspect, or the sixth aspect, a communication connection is established between the first radio access network device and a core network device, and a communication connection is established between the second radio access network device and the core network device; and information is forwarded between the first radio access network device and the second radio access network device by using the core network device.

In a possible implementation of the fourth aspect, the fifth aspect, or the sixth aspect, the traffic model information includes any one or more of the following information: traffic period information, information about a time offset of traffic relative to a system frame number, sidelink data packet priority PPPP information, sidelink data packet reliability PPPR information, or traffic packet size information.

In a possible implementation of the fifth aspect, the processing module of the second radio access network device is further configured to perform any one or more of the following operations: determining a resource period of the transmission resource based on the traffic period information; determining a time domain location of the transmission resource relative to a start system frame number based on the information about the time offset of the traffic relative to the system frame number; determining, based on the PPPP information, a priority of data carried on the transmission resource; determining, based on the PPPR information, a reliability requirement corresponding to the transmission resource and channel quality corresponding to the transmission resource; or determining, based on the traffic packet size information, an amount of traffic data carried on the transmission resource.

In the sixth aspect of this application, the composition modules of the first terminal device may further perform the steps described in the third aspect and the possible implementations thereof. For details, refer to the descriptions in the third aspect and the possible implementations thereof.

According to a seventh aspect, an embodiment of this application provides a computer-readable storage medium. The computer-readable storage medium stores an instruction, and when the instruction is run on a computer, the computer is enabled to perform the method according to the first aspect, the second aspect, or the third aspect.

According to an eighth aspect, an embodiment of this application provides a computer program product including an instruction. When the computer program product runs on a computer, the computer is enabled to perform the method according to the first aspect, the second aspect, or the third aspect.

According to a ninth aspect, an embodiment of this application provides a communications apparatus. The communications apparatus may include an entity such as a device or a chip. The communications apparatus includes a processor, and the processor is configured to execute a program instruction, so that the communications apparatus performs the method according to any one of the first aspect, the second aspect, or the third aspect. The communications apparatus implements a function of any one of the following devices: a first radio access network device, a second radio access network device, or a first terminal device. Alternatively, the communications apparatus may be a system chip, applied to the first radio access network device, the second radio access network device, or the first terminal device.

In a possible implementation of the ninth aspect, the communications apparatus further includes a memory, where the memory is configured to store the program instruction.

According to a tenth aspect, this application provides a chip system. The chip system includes a processor, configured to support a first radio access network device, a second radio access network device, or a first terminal device in implementing a function in the first aspect, the second aspect, or the third aspect respectively, for example, sending or processing data and/or information in the foregoing methods. In a possible design, the chip system further includes a memory. The memory is configured to store a program instruction and data that are necessary for the first radio access network device, the second radio access network device, or the first terminal device. The chip system may include a chip, or may include a chip and another discrete component.

### BRIEF DESCRIPTION OF DRAWINGS

FIG. 1 is a schematic diagram of a system architecture to which a data transmission method according to an embodiment of this application is applied;
FIG. 2 is another schematic diagram of a system architecture to which a data transmission method according to an embodiment of this application is applied;
FIG. 3A and FIG. 3B are a schematic block flowchart of a data transmission method according to an embodiment of this application;
FIG. 4 is a schematic flowchart of interaction between UE, a source base station, and a target base station according to an embodiment of this application;
FIG. 5 is another schematic flowchart of interaction between UE, a source base station, and a target base station according to an embodiment of this application;
FIG. 6 is a schematic flowchart of interaction between UE, a source base station, a target base station, and an MME according to an embodiment of this application;
FIG. 7 is a schematic structural diagram of composition of a first terminal device according to an embodiment of this application;
FIG. 8 is a schematic structural diagram of composition of a first radio access network device according to an embodiment of this application;
FIG. 9 is a schematic structural diagram of composition of a second radio access network device according to an embodiment of this application;
FIG. 10 is another schematic structural diagram of composition of a first terminal device according to an embodiment of this application;
FIG. 11 is another schematic structural diagram of composition of a first radio access network device according to an embodiment of this application; and
FIG. 12 is another schematic structural diagram of composition of a second radio access network device according to an embodiment of this application.

### DESCRIPTION OF EMBODIMENTS

Embodiments of this application provide a data transmission method, a radio access network device, and a terminal device, to reduce a transmission delay of a terminal device after a handover, improve reliability of data transmission of the terminal device in a handover process, and improve communication efficiency.

The following describes the embodiments of this application with reference to accompanying drawings.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a discrimination manner for describing objects having a same attribute in the embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

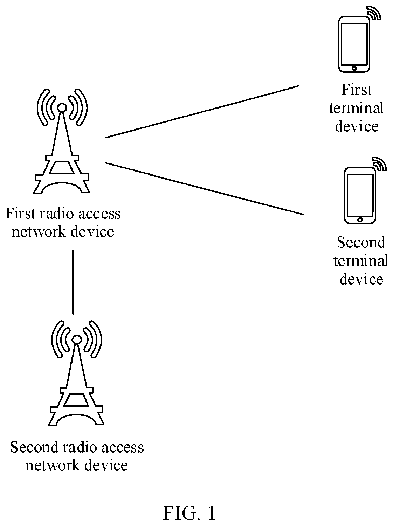

The technical solutions in the embodiments of this application may be applied to a communications system. As shown in FIG. 1, the communications system provided in the embodiments of this application may include at least two radio access network devices and two terminal devices. The two radio access network devices are a first radio access network device and a second radio access network device, and the two terminal devices are a first terminal device and a second terminal device. The first radio access network device is a radio access network device serving the first terminal device before the first terminal device performs a handover procedure. The second radio access network device is a target radio access network device for which the first terminal device performs the handover procedure. The first terminal device is a terminal device that performs the handover procedure. The second terminal device is a terminal device that communicates with the first terminal device. A communication link established between the first terminal device and the second terminal device is a sidelink. Specific implementations of the radio access network devices and the terminal devices may be flexibly selected with reference to an actual application scenario. This is not limited herein.

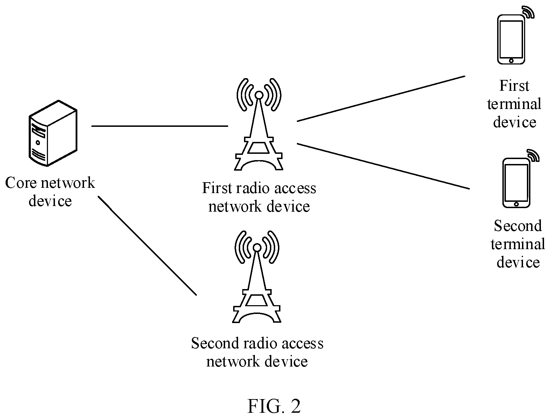

As shown in FIG. 2, in addition to the foregoing two radio access network devices and two terminal devices, the communications system provided in the embodiments of this application further includes a core network device. In an architecture of the communications system shown in FIG. 2, the terminal devices are connected to the radio access network device in a wireless manner, and the radio access network devices are connected to the core network device in a wireless or wired manner. The core network device and the radio access network device may be different physical devices independent of each other, or functions of the core network device and logical functions of the radio access network device may be integrated into one physical device, or some functions of the core network device and some functions of the radio access network device may be integrated into one physical device. The terminal device may be at a fixed location or may be mobile. FIG. 2 is merely a schematic diagram, and the communications system may further include another network device, for example, may further include a wireless relay device and a wireless backhaul device that are not shown in FIG. 2. Quantities of core network devices, radio access network devices, and terminal devices that are included in the communications system are not limited in the embodiments of this application. The radio access network device is an access device that is in the communications system and to which the terminal device is connected in a wireless manner. The radio access network device may be a NodeB (NodeB), an evolved NodeB (eNodeB), a gNodeB in a 5G communications system, a base station in a future communications system, an access node in a wireless fidelity (wireless fidelity, Wi-Fi) system, or the like. A specific technology and a specific device form used for the radio access network device are not limited in the embodiments of this application.

The terminal device may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The radio access network device and the terminal device each may be deployed on the land, including an indoor device, an outdoor device, a handheld device, or a vehicle-mounted device; may be deployed on the water; or may be deployed on an airplane, a balloon, and a satellite in the air. Application scenarios of the radio access network device and the terminal device are not limited in the embodiments of this application.

Communication between the radio access network device and the terminal device and communication between the terminal devices may be performed by using a licensed spectrum (licensed spectrum), or an unlicensed spectrum (unlicensed spectrum), or both a licensed spectrum and an unlicensed spectrum. The communication between the radio access network device and the terminal device and the communication between the terminal devices may be performed by using a spectrum below 6 gigahertz (gigahertz, GHz), a spectrum above 6 GHz, or both a spectrum below 6 GHz and a spectrum above 6 GHz. Spectrum resources used for the radio access network device and the terminal device are not limited in the embodiments of this application.

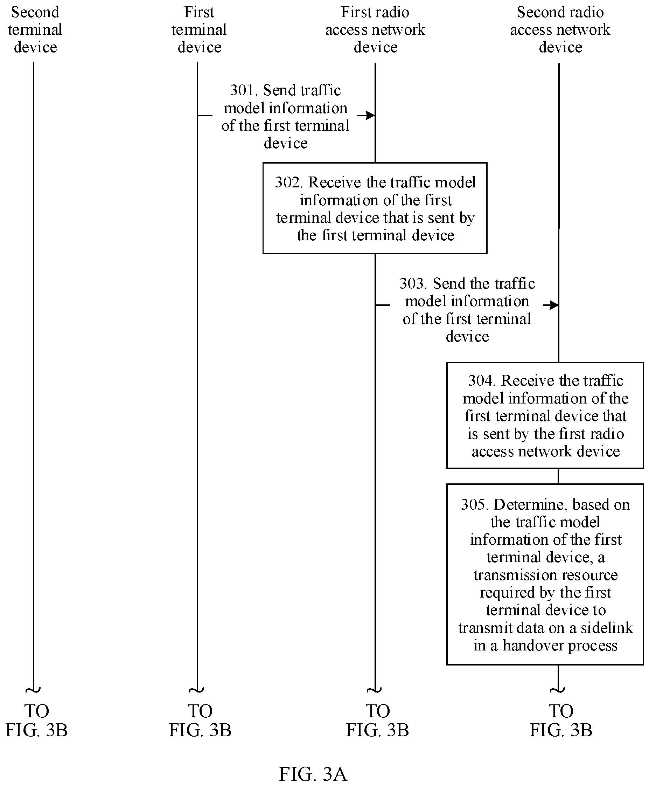

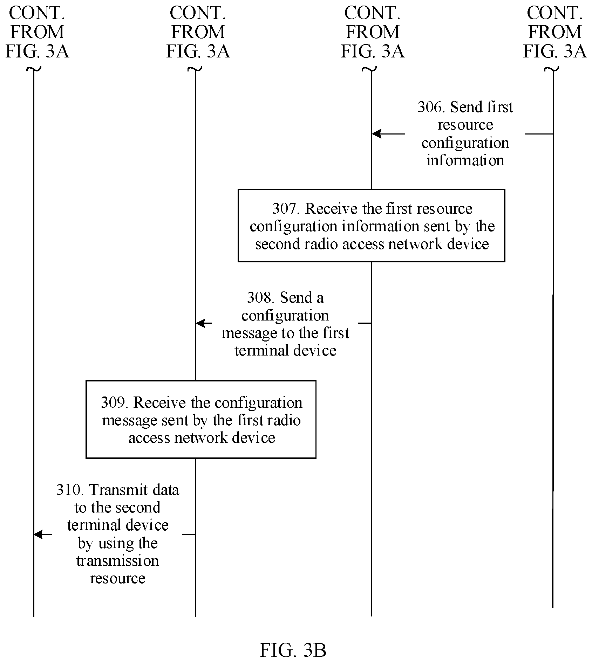

The embodiments of this application relate to processes of interaction between the first radio access network device and the second radio access network device, between the first radio access network device and the first terminal device, and between the first terminal device and the second terminal device. Referring to FIG. 3A and FIG. 3B, a data transmission method provided in an embodiment of this application may include the following steps.

301. A first terminal device sends traffic model information of the first terminal device to a first radio access network device.

In this embodiment of this application, the first terminal device is currently located in a coverage area of a cell (namely, a source cell) managed by the first radio access network device. The first terminal device obtains the traffic model information of the first terminal device, and then the first terminal device sends the traffic model information (traffic model) of the first terminal device to the first radio access network device. For example, the first terminal device may send the traffic model information of the first terminal device by using a UE assistance information (assistance information) field in radio resource control (radio resource control, RRC) signaling. The traffic model information of the first terminal device may also be referred to as UE assistance information (assistance information), and the traffic model information is used to describe a related attribute of traffic transmitted by the first terminal device. In an actual traffic transmission scenario, content included in the traffic model information may be determined based on the traffic transmitted by the first terminal device.

In some embodiments of this application, the traffic model information further includes any one or more of the following information: traffic period information, information about a time offset of the traffic relative to a system frame number (system frame number, SFN), sidelink data packet priority (prose per-packet priority, PPPP) information, sidelink data packet reliability (prose per-packet reliability, PPPR) information, or traffic packet size information. The traffic period information is a transmission period of the traffic transmitted by the first terminal device, and the information about the time offset of the traffic relative to the SFN is a time offset of the traffic transmitted by the first terminal device relative to a fixed SFN (for example, SFN=0). To be specific, the information about the time offset of the traffic relative to the SFN indicates an arrival moment of the traffic transmitted by the first terminal device. A PPPP and PPPR respectively represent a priority requirement and a relative reliability requirement, in time, of the traffic transmitted by the first terminal device. A traffic packet size is a data amount of the traffic transmitted by the first terminal device.

In some embodiments of this application, in addition to step 301 performed by the first terminal device, the data transmission method provided in this embodiment of this application further includes any one or more of the following operations:
The first terminal device sends, to the first radio access network device, information about a frequency supported by the first terminal device.

Alternatively, the first terminal device sends, to the first radio access network device, a channel busy ratio (channel busy ratio, CBR) measurement result generated by the first terminal device.

Alternatively, the first terminal device sends location information of the first terminal device to the first radio access network device.

Alternatively, the first terminal device sends inter-node synchronization information to the first radio access network device, where the inter-node synchronization information is used to indicate information about a system frame number offset between the first radio access network device and a second radio access network device.

Alternatively, the first terminal device sends network standard request information to the first radio access network device, where the network standard request information is used to request a network standard corresponding to the transmission resource from a second radio access network device.

The information about the frequency supported by the first terminal device may also be referred to as information about a frequency in which the first terminal device is interested. The information about the frequency supported by the first terminal device indicates frequencies supported by the first terminal device. The information about the frequency supported by the first terminal device may be reported to the first radio access network device by using RRC signaling. For example, the information about the frequency supported by the first terminal device may be reported to the first radio access network device by using sidelink terminal information (SidelinkUEInformation) in the RRC signaling.

The first terminal device may further generate the CBR measurement result. The CBR measurement result is a result obtained after the first terminal device monitors a busy/idle status of a time-frequency resource, and may be used to assist the second radio access network device in transmission resource configuration. The CBR measurement result may be reported to the first radio access network device also by using RRC signaling.

The location information of the first terminal device is a current geographical location of the first terminal device. For example, the location information may be specifically global positioning system (global positioning system, GPS) information of the first terminal device. The location information of the first terminal device is used by the second radio access network device to allocate a transmission resource to the first terminal device. The location information of the first terminal device may be reported to the first radio access network device also by using RRC signaling. The first terminal device may further generate the inter-node synchronization information. The inter-node synchronization information is used to indicate the information about the system frame number offset between the first radio access network device and the second radio access network device. That is, the inter-node synchronization information is used to indicate a synchronization time offset between the two radio access network devices. The first terminal device may proactively send the inter-node synchronization information to the first radio access network device. For example, the first terminal device may send the inter-node synchronization information to the first radio access network device at a time, or may periodically send the inter-node synchronization information to the first radio access network device. In addition, the first terminal device may alternatively send the inter-node synchronization information based on a configuration of the first radio access network device. A manner in which the first terminal device sends the inter-node synchronization information is not limited herein. It should be noted that either a periodic reporting case or a single reporting case may be configured by the first radio access network device. For example, in the periodic reporting case, the first radio access network device needs to configure a reporting period for the first terminal device.

The first terminal device may further generate the network standard request information, and send the network standard request information to the first radio access network device, where the network standard request information is used to request the network standard corresponding to the transmission resource from the second radio access network device. The second radio access network device may further indicate the network standard corresponding to the transmission resource determined for the first terminal device. For example, when the second radio access network device sends a handover acknowledgement (handover ACK, HO ACK) to the first radio access device, and the HO ACK carries resource configuration information of a target cell, the second radio access network device needs to further indicate whether the transmission resource is used in a long term evolution (long term evolution, LTE) standard or a new radio (new radio, NR) standard. This is because in existing deployment, one first terminal device may have both an LTE SL capability and an NR SL capability. Therefore, the second radio access network device needs to indicate the network standard corresponding to the transmission resource. In addition, when performing RRC reconfiguration on the first terminal device, the first radio access network device also needs to further indicate the standard in which the configured transmission resource is used. Therefore, when receiving the transmission resource, the first terminal device performs adaptation by using a corresponding sending parameter.

302. The first radio access network device receives the traffic model information of the first terminal device that is sent by the first terminal device.

In this embodiment of this application, the first radio access network device is configured to manage the source cell in which the first terminal device is located before the handover. The first terminal device sends the traffic model information of the first terminal device to the first radio access network device, and the first radio access network device may receive the traffic model information of the first terminal device through a wireless network.

303. The first radio access network device sends the traffic model information of the first terminal device to the second radio access network device.

In this embodiment of this application, the first radio access network device is configured to manage the source cell in which the first terminal device is located before the handover, and the second radio access network device is configured to manage the target cell in which the first terminal device is located after the handover. After the first radio access network device receives the traffic model information of the first terminal device, to help the second radio access network device allocate a transmission resource to the first terminal device, the first radio access network device may send the traffic model information of the first terminal device to the second radio access network device. For example, if the first radio access network device and the second radio access network device may be connected through an X2 interface, the first radio access network device sends the traffic model information of the first terminal device to the second radio access network device through the X2 interface.

In some embodiments of this application, the first terminal device sends a measurement report to the first radio access network device to trigger the handover, and the first radio access network device determines, based on the measurement report reported by the first terminal device, to start a handover procedure. The first radio access network device sends a handover request (handover request, HO request) to the second radio access network device, where the handover request carries the traffic model information of the first terminal device. The first radio access network device may send the traffic model information of the first terminal device to the second radio access network device by using the handover request, so that the second radio access network device can obtain the traffic model information of the first terminal device. For example, the first radio access network device is a source base station, the second radio access network device is a target base station, and the HO request sent by the source base station to the target base station carries sidelink traffic model information.

In some embodiments of this application, the X2 interface between the source cell and the target cell is unavailable, or the X2 interface does not exist. In this implementation scenario, a communication connection is established between the first radio access network device and a core network device, a communication connection is established between the second radio access network device and the core network device, and information is forwarded between the first radio access network device and the second radio access network device by using the core network device. For example, the first radio access network device sends the traffic model information of the first terminal device to the core network device, and the core network device forwards the traffic model information to the second radio access network device.

In some embodiments of this application, in addition to step 303 performed by the first radio access network device, the data transmission method provided in this embodiment of this application further includes any one or more of the following operations:
The first radio access network device sends, to the second radio access network device, the information about the frequency supported by the first terminal device.

Alternatively, the first radio access network device sends, to the second radio access network device, the channel busy ratio CBR measurement result generated by the first terminal device.

Alternatively, the first radio access network device sends the location information of the first terminal device to the second radio access network device.

Alternatively, the first radio access network device sends the inter-node synchronization information to the second radio access network device, where the inter-node synchronization information is used to indicate the information about the system frame number SFN offset between the first radio access network device and the second radio access network device.

Alternatively, the first radio access network device sends the network standard request information to the second radio access network device, where the network standard request information is used to request the network standard corresponding to the transmission resource from the second radio access network device.

The information about the frequency supported by the first terminal device may also be referred to as information about a frequency in which the first terminal device is interested. The information about the frequency supported by the first terminal device indicates frequencies supported by the first terminal device. The information about the frequency supported by the first terminal device may be reported to the first radio access network device by using RRC signaling. The first radio access network device may obtain, by using the RRC signaling, the information about the frequency supported by the first terminal device. Further, the first radio access network device may send, to the second radio access network device, the information about the frequency supported by the first terminal device, so that the second radio access network device can obtain the information about the frequency supported by the first terminal device.

The first terminal device may further generate the CBR measurement result. The CBR measurement result is a result obtained after the first terminal device monitors a busy/idle status of a time-frequency resource, and may be used to assist the second radio access network device in transmission resource configuration. The CBR measurement result may be reported to the first radio access network device also by using RRC signaling, and the first radio access network device may obtain the CBR measurement result by using the RRC signaling. The first radio access network device sends the CBR measurement result to the second radio access network device, so that the second radio access network device can obtain the CBR measurement result.

The location information of the first terminal device is a current geographical location of the first terminal device, and the location information of the first terminal device is used by the second radio access network device to allocate a transmission resource to the first terminal device. The location information of the first terminal device may be reported to the first radio access network device also by using RRC signaling. The first radio access network device may obtain the location information of the first terminal device by using the RRC signaling. The first radio access network device may send the location information of the first terminal device to the second radio access network device, so that the second radio access network device can obtain the location information of the first terminal device.

The first terminal device may further generate the inter-node synchronization information. The inter-node synchronization information is used to indicate the information about the system frame number offset between the first radio access network device and the second radio access network device. That is, the inter-node synchronization information is used to indicate a synchronization time offset between the two radio access network devices. The first terminal device may proactively send the inter-node synchronization information to the first radio access network device. For example, the first terminal device may send the inter-node synchronization information to the first radio access network device at a time, or may periodically send the inter-node synchronization information to the first radio access network device. In addition, the first terminal device may alternatively send the inter-node synchronization information based on a configuration of the first radio access network device. A manner in which the first terminal device sends the inter-node synchronization information is not limited herein. It should be noted that either a periodic reporting case or a single reporting case may be configured by the first radio access network device. For example, in the periodic reporting case, the first radio access network device needs to configure a reporting period for the first terminal device. The first radio access network device may send the inter-node synchronization information to the second radio access network device, so that the second radio access network device can obtain the inter-node synchronization information.

The first terminal device may further generate the network standard request information, and send the network standard request information to the first radio access network device, where the network standard request information is used to request the network standard corresponding to the transmission resource from the second radio access network device. The first radio access network device sends the network standard request information to the second radio access network device, so that the second radio access network device can obtain the network standard request information. The second radio access network device may further indicate the network standard corresponding to the transmission resource determined for the first terminal device. For example, when the second radio access network device sends an HO ACK to the first radio access device, and the HO ACK carries resource configuration information of a target cell, the second radio access network device needs to further indicate whether the transmission resource is used in an LTE standard or an NR standard. This is because in existing deployment, one first terminal device may have both an LTE SL capability and an NR SL capability. Therefore, the second radio access network device needs to indicate the network standard corresponding to the transmission resource. In addition, when performing RRC reconfiguration on the first terminal device, the first radio access network device also needs to further indicate the standard in which the configured transmission resource is used. Therefore, when receiving the transmission resource, the first terminal device performs adaptation by using a corresponding sending parameter.

Further, in some embodiments of this application, any one or more of the following information is carried in the handover request: the traffic model information, the information about the frequency supported by the first terminal device, the CBR measurement result, the location information of the first terminal device, the inter-node synchronization information, or the network standard request information.

The handover request is sent by the first radio access network device to the second radio access network device.

In some embodiments of this application, the first terminal device sends a measurement report to the first radio access network device to trigger the handover, and the first radio access network device determines, based on the measurement report reported by the first terminal device, to start a handover procedure. The first radio access network device sends the handover request to the second radio access network device, where the handover request carries any one or more of the following information: the traffic model information, the information about the frequency supported by the first terminal device, the CBR measurement result, the location information of the first terminal device, the inter-node synchronization information, or the network standard request information. The first radio access network device may send, to the second radio access network device by using the handover request, any one or more of the following information to be carried in the handover request: the traffic model information of the first terminal device, the information about the frequency supported by the first terminal device, the CBR measurement result, the location information of the first terminal device, the inter-node synchronization information, or the network standard request information.

304. The second radio access network device receives the traffic model information of the first terminal device that is sent by the first radio access network device.

In this embodiment of this application, to help the second radio access network device allocate the transmission resource to the first terminal device, the second radio access network device may receive the traffic model information of the first terminal device that is sent by the first radio access network device. For example, if the first radio access network device and the second radio access network device may be connected through an X2 interface, the second radio access network device receives, through the X2 interface, the traffic model information of the first terminal device that is sent by the first radio access network device.

In some embodiments of this application, the first terminal device sends a measurement report to the first radio access network device to trigger the handover, and the first radio access network device determines, based on the measurement report reported by the first terminal device, to start a handover procedure. The first radio access network device sends the handover request to the second radio access network device, where the handover request carries the traffic model information of the first terminal device. The second radio access network device may obtain the traffic model information of the first terminal device by using the handover request. For example, the first radio access network device is a source base station, the second radio access network device is a target base station, the HO request sent by the source base station to the target base station carries traffic model information used to configure a resource for a sidelink, and the target base station obtains, by using the HO request, the traffic model information used to configure the resource for the sidelink.

In some embodiments of this application, the X2 interface between the source cell and the target cell is unavailable, or the X2 interface does not exist. In this implementation scenario, a communication connection is established between the first radio access network device and a core network device, a communication connection is established between the second radio access network device and the core network device, and information is forwarded between the first radio access network device and the second radio access network device by using the core network device. For example, the second radio access network device receives the traffic model information of the first terminal device that is forwarded by the core network device, where the traffic model information is sent by the first radio access network device to the core network device.

305. The second radio access network device determines, based on the traffic model information of the first terminal device, a transmission resource required by the first terminal device to transmit data on a sidelink in a handover process. The handover process is a process in which the first terminal device is handed over from the first radio access network device to the second radio access network device, and the sidelink is a communication link between the first terminal device and a second terminal device.

In this embodiment of this application, after the second radio access network device obtains the traffic model information of the first terminal device, the second radio access network device parses the traffic model information of the first terminal device, to determine the transmission resource required for the traffic transmitted by the first terminal device. The traffic model information of the first terminal device is information required when the second radio access network device allocates a transmission resource to the first terminal device. In an actual traffic transmission scenario, the content included in the traffic model information may be determined based on the traffic transmitted by the first terminal device. The second radio access network device may allocate, based on the traffic model information of the first terminal device, the transmission resource to the traffic transmitted by the first terminal device, where the transmission resource may be used by the first terminal device to transmit data on the sidelink in the handover process.

In some embodiments of this application, the transmission resource determined by the second radio access network device for the first terminal device is a periodically configured resource. When the transmission resource determined by the second radio access network device is a periodically configured resource, the first terminal device may transmit data by using the periodically configured transmission resource.

Further, in some embodiments of this application, the transmission resource is configured in a semi-persistent scheduling (semi-persistent scheduling, SPS) manner, and/or is configured in a grant-free (grant-free, GF) manner. Both the SPS manner and the GF manner are resource pre-configuration methods, and are two different resource configuration manners. In the SPS manner, a resource is pre-configured by using RRC signaling, and activated by using downlink control information (downlink control information, DCI) signaling. In the GF manner, a resource is configured by using RRC, and activated also by using the RRC signaling. That is, the RRC signaling indicates an effective moment of a transmission resource configured in the GF manner. In an actual application, the second radio access network device may flexibly configure a used resource pre-configuration manner based on a scenario.

In some embodiments of this application, the traffic model information further includes any one or more of the following information: the traffic period information, the information about the time offset of the traffic relative to the SFN, the PPPP information, the PPPR information, or the traffic packet size information.

The traffic period information is a transmission period of traffic transmitted by the first terminal device, and the information about the time offset of the traffic relative to the SFN is a time offset of the traffic transmitted by the first terminal device relative to a fixed SFN (for example, SFN=0). To be specific, the information about the time offset of the traffic relative to the SFN indicates an arrival moment of the traffic transmitted by the first terminal device. A PPPP and PPPR respectively represent a priority requirement and a relative reliability requirement, in time, of the traffic transmitted by the first terminal device. A traffic packet size is a data amount of the traffic transmitted by the first terminal device.

Further, in some embodiments of this application, step 305 that the second radio access network device determines, based on the traffic model information of the first terminal device, a transmission resource required by the first terminal device to transmit data on a sidelink SL in a handover process includes:
The second radio access network device determines a resource period of the transmission resource based on the traffic period information.

Alternatively, the second radio access network device determines a time domain location of the transmission resource relative to a start system frame number based on the information about the time offset of the traffic relative to the system frame number.

Alternatively, the second radio access network device determines, based on the PPPP information, a priority of data carried on the transmission resource.

Alternatively, the second radio access network device determines, based on the PPPR information, a reliability requirement corresponding to the transmission resource and channel quality corresponding to the transmission resource.

Alternatively, the second radio access network device determines, based on the traffic packet size information, an amount of traffic data carried on the transmission resource.

The traffic period information is a transmission period of traffic transmitted by the first terminal device. The second radio access network device may determine the resource period of the transmission resource based on the traffic period information, and a periodically configured transmission resource may be used for periodically transmitted traffic. The information about the time offset of the traffic relative to the SFN is a time offset of the traffic transmitted by the first terminal device relative to a fixed SFN (for example, SFN=0). To be specific, the information about the time offset of the traffic relative to the SFN indicates an arrival moment of the traffic transmitted by the first terminal device. The second radio access network device may determine the time domain location of the transmission resource relative to the start system frame number based on the information about the time offset of the traffic relative to the system frame number, so that the transmission resource determined by the second radio access network device can be correctly obtained by the first terminal device through parsing. A PPPP and PPPR respectively represent a priority requirement and a relative reliability requirement, in time, of the traffic transmitted by the first terminal device. The second radio access network device may determine, based on the PPPP information, the priority of the data carried on the transmission resource, so that data with different priorities is transmitted by using different transmission resources. The PPPP information may be further used to process scheduling priorities of different terminal devices. The second radio access network device may further determine, based on the PPPR information, the reliability requirement corresponding to the transmission resource and the channel quality corresponding to the transmission resource, to ensure that the second radio access network device selects transmission resources with appropriate channel quality for data that is with different PPPR requirements and that is of the first terminal device. A traffic packet size is a data amount of the traffic transmitted by the first terminal device. The second radio access network device may determine, based on the traffic packet size information, the amount of the traffic data carried on the transmission resource, to configure an appropriate quantity of resources for the terminal device. This prevents a transmission failure caused by an oversized traffic packet.

In some embodiments of this application, in addition to step 305 performed by the second radio access network device, the data transmission method provided in this embodiment of this application further includes any one or more of the following operations:
The second radio access network device sends network standard indication information to the first radio access network device, where the network standard indication information is used to indicate the network standard corresponding to the transmission resource.

Alternatively, the second radio access network device sends third resource configuration information to the first radio access network device, where the third resource configuration information includes at least one of the following information: carrier aggregation (carrier aggregation, CA) configuration information or duplication configuration information.

The first radio access network device sends the network standard request information to the second radio access network device, so that the second radio access network device can obtain the network standard request information. The second radio access network device may further indicate the network standard corresponding to the transmission resource determined for the first terminal device. For example, when the second radio access network device sends an HO ACK to the first radio access device, and the HO ACK carries resource configuration information of a target cell, the second radio access network device needs to further indicate whether the transmission resource is used in an LTE standard or an NR standard. This is because in existing deployment, one first terminal device may have both an LTE SL capability and an NR SL capability. Therefore, the second radio access network device needs to indicate the network standard corresponding to the transmission resource. In addition, when performing RRC reconfiguration on the first terminal device, the first radio access network device also needs to further indicate the standard in which the configured transmission resource is used. Therefore, when receiving the transmission resource, the first terminal device performs adaptation by using a corresponding sending parameter.

The second radio access network device may further generate the CA configuration information and the duplication (duplication) configuration information for the first terminal device. For example, the second radio access network device may obtain the information about the frequency supported by the first terminal device, to configure, based on the information about the frequency supported by the first terminal device, a carrier used during CA, and to generate the CA configuration information. For another example, the second radio access network device may generate the duplication configuration information based on a traffic reliability requirement of the first terminal device. For example, the second radio access network device may obtain PPPR information generated by the first terminal device, and the PPPR information may assist the second radio access network device in determining whether to use duplication. For example, duplication is used when PPPR is lower than a specific value. The second radio access network device sends the third resource configuration information to the first radio access network device, where the third resource configuration information includes the CA configuration information and the duplication configuration information. 306. The second radio access network device sends first resource configuration information to the first radio access network device, where the first resource configuration information includes the transmission resource.

In this embodiment of this application, after the second radio access network device determines the transmission resource required by the first terminal device to transmit data on the sidelink in the handover process, the second radio access network device generates the first resource configuration information. The first resource configuration information includes the transmission resource determined by the second radio access network device for the first terminal device. Then, the second radio access network device sends the first resource configuration information to the first radio access network device. For example, if the first radio access network device and the second radio access network device may be connected through an X2 interface, the second radio access network device sends the first resource configuration information to the first radio access network device through the X2 interface.

In some embodiments of this application, in addition to step 305 and step 306 performed by the second radio access network device, the data transmission method provided in this embodiment of this application further includes any one or more of the following operations:
The second radio access network device receives the information that is about the frequency supported by the first terminal device and that is sent by the first radio access network device.

Alternatively, the second radio access network device receives the channel busy ratio CBR measurement result that is generated by the first terminal device and that is sent by the first radio access network device.

Alternatively, the second radio access network device receives the location information of the first terminal device that is sent by the first radio access network device.

Alternatively, the second radio access network device receives the inter-node synchronization information sent by the first radio access network device, where the inter-node synchronization information is used to indicate the information about the system frame number SFN offset between the first radio access network device and the second radio access network device.

Alternatively, the second radio access network device receives the network standard request information sent by the first radio access network device, where the network standard request information is used to request the network standard corresponding to the transmission resource from the second radio access network device.

Further, the second radio access network device further performs any one or more of the following operations:
The second radio access network device configures a carrier for the first terminal device based on the information about the frequency supported by the first terminal device.

Alternatively, the second radio access network device determines a location of the transmission resource for the first terminal device based on the CBR measurement result.

Alternatively, the second radio access network device determines, for the first terminal device based on the location information of the first terminal device, a resource location corresponding to an area in which the first terminal device is located.

Alternatively, the second radio access network device corrects a time domain location of the transmission resource based on the inter-node synchronization information.

The information about the frequency supported by the first terminal device may also be referred to as information about a frequency in which the first terminal device is interested. The information about the frequency supported by the first terminal device indicates frequencies supported by the first terminal device. The second radio access network device may obtain the information about the frequency supported by the first terminal device. The second radio access network device parses the information about the frequency supported by the first terminal device, and then determines carrier information corresponding to the data transmission of the terminal device.

The first terminal device may further generate the CBR measurement result. The CBR measurement result is a result obtained after the first terminal device monitors a busy/idle status of a time-frequency resource, and may be used to assist the second radio access network device in transmission resource configuration. The second radio access network device may obtain the CBR measurement result, and the second radio access network device determines an idle/busy status of a time-frequency resource by parsing the CBR measurement result, to determine, for the first terminal device based on the CBR measurement result, a time-frequency resource corresponding to the data transmission.

The location information of the first terminal device is a current geographical location of the first terminal device. The second radio access network device may obtain the location information of the first terminal device, and then determine a time-frequency resource corresponding to a geographical area in which the first terminal device is located. The second radio access network device may obtain the inter-node synchronization information, and then correct the time domain location of the transmission resource based on the inter-node synchronization information. This is not limited thereto. In some other embodiments of this application, the second radio access network device may not correct the time domain location of the transmission resource, but the first radio access network device corrects the time domain location of the transmission resource based on the inter-node synchronization information.

The first terminal device may further generate the network standard request information. The second radio access network device may obtain the network standard request information via the first radio access network device. The second radio access network device may further indicate the network standard corresponding to the transmission resource determined for the first terminal device.

307. The first radio access network device receives the first resource configuration information sent by the second radio access network device.

The first resource configuration information includes the transmission resource required by the first terminal device to transmit data on the sidelink in the handover process. The handover process is a process in which the first terminal device is handed over from the first radio access network device to the second radio access network device, and the sidelink is a communication link between the first terminal device and the second terminal device.

In this embodiment of this application, the second radio access network device may send the first resource configuration information to the first radio access network device, so that the first radio access network device can receive the first resource configuration information from the second radio access network device. For example, if the first radio access network device and the second radio access network device may be connected through an X2 interface, the first radio access network device receives, through the X2 interface, the first resource configuration information sent by the second radio access network device.

In some embodiments of this application, in addition to step 307 performed by the first radio access network device, the data transmission method provided in this embodiment of this application further includes any one or more of the following operations:
The first radio access network device receives the network standard indication information sent by the second radio access network device, where the network standard indication information is used to indicate the network standard corresponding to the transmission resource.

Alternatively, the first radio access network device receives the third resource configuration information sent by the second radio access network device, where the third resource configuration information includes at least one of the following information: the carrier aggregation CA configuration information or the duplication configuration information.

The second radio access network device may further indicate the network standard corresponding to the transmission resource determined for the first terminal device. For example, when the second radio access network device sends an HO ACK to the first radio access device, and the HO ACK carries resource configuration information of a target cell, the second radio access network device needs to further indicate whether the transmission resource is used in an LTE standard or an NR standard. The second radio access network device may send the network standard indication information to the first radio access network device. Therefore, the first radio access network device may obtain the network standard indication information from the second radio access network device.

The second radio access network device sends the third resource configuration information to the first radio access network device, where the third resource configuration information includes the CA configuration information and the duplication configuration information. Therefore, the first radio access network device can obtain the third resource configuration information from the second radio access network device, and the first radio access network device can obtain the CA configuration information and the duplication configuration information that are generated by the second radio network device.

In some embodiments of this application, that the first radio access network device receives the first resource configuration information sent by the second radio access network device includes:
The first radio access network device receives a handover acknowledgment sent by the second radio access network device, where the handover acknowledgment carries the first resource configuration information.

In the foregoing embodiments, the first radio access network device sends the handover request to the second radio access network device, and the second radio access network device may send the handover acknowledgment, where the handover acknowledgment carries the first resource configuration information determined by the second radio access network device, so that the first radio access network device can obtain the first resource configuration information by parsing the handover acknowledgment.

308. The first radio access network device sends a configuration message to the first terminal device.

The configuration message includes the first resource configuration information.

Alternatively, the configuration message includes second resource configuration information generated by the first radio access network device based on the first resource configuration information, and the second resource configuration information includes the transmission resource required by the first terminal device to transmit data on the sidelink in the handover process.

In some embodiments of this application, the first radio access network device may send the configuration message by using RRC reconfiguration information. In addition, the configuration message may be carried in a mobility control information (mobility control info) information element in the RRC reconfiguration information.

In some embodiments of this application, after the first radio access network device receives the first resource configuration information, the first radio access network device may send the configuration message to the first terminal device. The configuration message may be sent by using RRC signaling. For example, the configuration message includes the first resource configuration information. That is, the first radio access network device sends, to the first terminal device, the configuration message carrying the first resource configuration information received from the second radio access network device. In addition, the first radio access network device may further generate the second resource configuration information based on the first resource configuration information. The second resource configuration information includes the transmission resource required by the first terminal device to transmit data on the sidelink in the handover process. The first radio access network device sends, to the first terminal device, the configuration message carrying the generated second resource configuration information.

In some embodiments of this application, the first radio access network device may further send the network standard indication information or the third resource configuration information to the first terminal device. The third resource configuration information includes at least one of the following information: the carrier aggregation CA configuration information or the duplication configuration information. The first terminal device may receive the network standard indication information. Therefore, when receiving the transmission resource, the first terminal device performs adaptation by using a corresponding sending parameter. The first terminal device determines, by parsing the CA configuration information, the CA determined by the second radio access network device, and determines, by parsing the duplication configuration information, whether to enable duplication.

309. The first terminal device receives the configuration message sent by the first radio access network device.

The configuration message includes the first resource configuration information. Alternatively, the configuration message includes the second resource configuration information generated by the first radio access network device based on the first resource configuration information. The first resource configuration information includes the transmission resource required by the first terminal device to transmit data on the sidelink SL in the handover process, the handover process is a process in which the first terminal device is handed over from the first radio access network device to the second radio access network device, and the sidelink is a communication link between the first terminal device and the second terminal device. The second resource configuration information includes the transmission resource required by the first terminal device to transmit data on the sidelink in the handover process.

In some embodiments of this application, in addition to step 309 performed by the first terminal device, the data transmission method provided in this embodiment of this application further includes any one or more of the following operations:
The first terminal device receives the network standard indication information sent by the first radio access network device, where the network standard indication information is used to indicate the network standard corresponding to the transmission resource.

Alternatively, the first terminal device receives the third resource configuration information sent by the first radio access network device, where the third resource configuration information includes at least one of the following information: the carrier aggregation CA configuration information or the duplication configuration information. The first terminal device sends the network standard request information. After the first radio access network device forwards the network standard request information, the second radio access network device receives the network standard request information. The second radio access network device may further indicate the network standard corresponding to the transmission resource determined for the first terminal device. In addition, when performing RRC reconfiguration on the first terminal device, the first radio access network device also needs to further indicate the standard in which the configured transmission resource is used. The first terminal device may receive the network standard indication information through forwarding by the first radio access network device. Therefore, when receiving the transmission resource, the first terminal device performs adaptation by using a corresponding sending parameter.

The second radio access network device sends the third resource configuration information to the first radio access network device, and the first radio access network device forwards the third resource configuration information, so that the first terminal device obtains the third resource configuration information, where the third resource configuration information includes the CA configuration information and the duplication configuration information. Therefore, the first terminal device determines, by parsing the CA configuration information, the CA determined by the second radio access network device, and determines, by parsing the duplication configuration information, whether to enable duplication.

310. The first terminal device transmits data to the second terminal device by using the transmission resource.

In this embodiment of this application, the first terminal device receives the configuration message sent by the first radio access network device, where the configuration message includes the first resource configuration information or the second resource configuration information. The first terminal device determines the transmission resource by parsing the first resource configuration information or the second resource configuration information. Then, the first terminal device may transmit data to the second terminal device by using the transmission resource. For example, the first terminal device may send data to the second terminal device by using the transmission resource.

Further, in some embodiments of this application, that the first terminal device transmits data to the second terminal device by using the transmission resource includes:
When the first terminal device uses a mode (mode) 3 for transmission, the first terminal device transmits data to the second terminal device by using the transmission resource from a moment at which the configuration message in step 309 is received by the first terminal device to a moment at which a cell to which the first terminal device is handed over is reconfigured.

Alternatively, when the first terminal device uses a mode 4 for transmission, the first terminal device transmits data to the second terminal device by using the transmission resource from a moment at which the configuration message is received by the first terminal device to a moment at which a sensed resource is obtained by the first terminal device. In a process of implementing mutual communication between vehicles, two communication modes are defined in the V2V scenario: a mode 3 and a mode 4. The mode 3 may be understood as that a process of communication between vehicles is controlled by a base station, and a transmit-end vehicle sends a control signal and a data signal on a resource scheduled by the base station. In the mode 4, a sending resource of a transmit-end vehicle is not controlled by a base station. Instead, the transmit-end vehicle searches for an appropriate resource by sensing (sensing) a busy/idle status of a channel, to send data. If the first terminal device is configured to use the mode 3 for transmission in the target cell, the first terminal device sends data by using a transmission resource of the source cell from a moment at which configuration information is received by the first terminal device to a moment at which RRC reconfiguration is performed on the target cell. If the first terminal device is configured to use the mode 4 for transmission in the target cell, the first terminal device sends data by using a transmission resource of the source cell from a moment at which configuration information is received by the first terminal device to a moment at which the sensed resource is obtained by the first terminal device.

It can be learned from example description of this application in the foregoing embodiments that, the first radio access network device may send the traffic model information of the first terminal device to the second radio access network device, so that the second radio access network device can determine, based on the traffic model information of the first terminal device, the transmission resource required by the first terminal device to transmit data on the SL in the handover process. The second radio access network device sends, to the first radio access network device, the first resource configuration information carrying the transmission resource, and the first radio access network device may send the configuration message to the first terminal device. In this way, the first terminal device can obtain, by using the configuration message, the transmission resource determined by the second radio access network device, and the first terminal device transmits data to the second terminal device by using the transmission resource. In this embodiment of this application, the second radio access network device determines, for the first terminal device based on the traffic model information of the first terminal device, the transmission resource required for transmitting data on the SL in the handover process, so that the first terminal device can perform data transmission with the second terminal device by using the transmission resource, thereby reducing a transmission delay of the terminal device after the handover, improving reliability of data transmission of the terminal device in the handover process, and improving communication efficiency.

To better understand and implement the foregoing solutions in the embodiments of this application, the following uses a corresponding application scenario as an example for specific description.

An embodiment of this application mainly relates to a terminal device and a radio access network device. An example in which the terminal device is specifically UE and the radio access network device is specifically an eNodeB is used below. For example, the UE may be the foregoing V-UE. In a process in which the UE is handed over from a source cell to a target cell, the source cell notifies the target cell of related information such as an SL traffic model (traffic model) by using an HO request (request) carrying the related information. The target cell directly configures an SL SPS/GF resource for the UE by using an HO acknowledgement (ACK). The SPS/GF resource is used for data sending in the handover process. Directly configuring the SL SPS/GF resource for the handover process reduces a measurement reconfiguration delay after a new cell is accessed, and improves reliability of data transmission in the handover process. It should be noted that the SPS/GF resource is a transmission resource configured in an SPS or GF manner. In an actual application, an appropriate resource and an effective moment need to be configured according to an actual case of to-be-sent traffic.

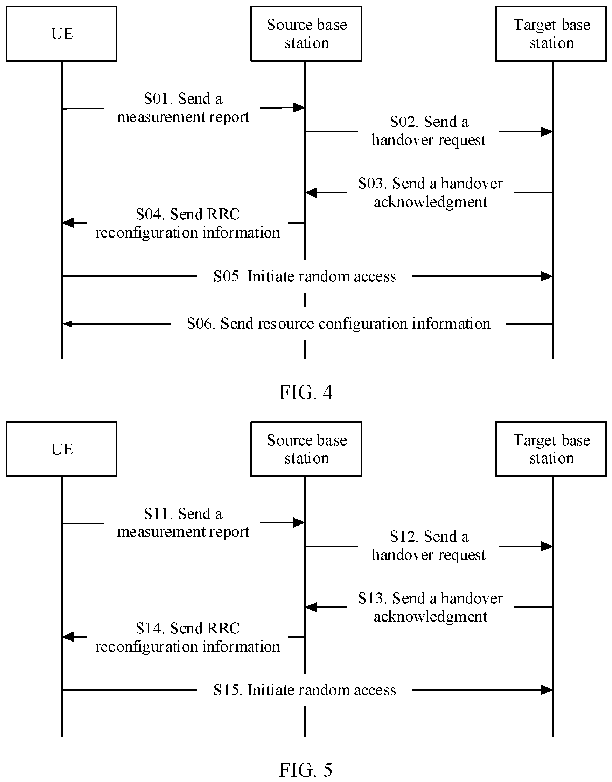

FIG. 4 is a schematic flowchart of interaction between UE, a source base station, and a target base station according to an embodiment of this application. In this embodiment, a source cell notifies a target cell of related information such as an SL traffic model by using an HO request carrying the related information. After the V-UE is handed over to the target cell, the target cell directly configures SL SPS/GF configuration information for the UE based on the SL traffic model. The traffic model is information exchanged between two base stations. For example, the information may be transmitted through an X2 interface or an Xn interface, or by using inter-node (inter-node) RRC signaling between the base stations.

A handover procedure shown in FIG. 4 may include the following processes:
S01. The V-UE sends a measurement report to the source base station to trigger a handover.
S02. The source base station determines, based on a measurement result reported by the UE, to start a handover procedure, and sends an HO request to the target base station, where the measurement result includes the measurement report, the HO request carries at least one of the following information, and the following information needs to be bound to a corresponding UE ID. The HO request carries the following information: a traffic model including a traffic period, an offset, a PPPP, PPPR, a message size, or the like; a frequency of interest; a CBR measurement result; or GPS information.
S03. The target base station sends a handover acknowledgement to the source base station.

For example, resource configuration information of an exceptional pool (exceptional pool) of the target cell is carried in an HO ACK message on an X2 interface.

S04. The source base station sends RRC reconfiguration information to the V-UE, performs RRC reconfiguration, requires the V-UE to perform the handover, and configures the resource information of the exceptional pool.

S05. The UE initiates access to the target base station, and performs the handover.

From a moment at which HO configuration information is received by the UE, and before a timer T304 expires, the UE randomly selects a resource in the exceptional pool for transmission. T304 starts when the UE receives an RRC connection reconfiguration message including mobility control information (mobility Control Info), and stops when random access to a new cell is completed.

S06. The target base station sends the resource configuration information to the UE.

After the V-UE successfully accesses the target cell, the target cell directly configures an SPS/GF resource, an SL CA configuration, and an SL duplication configuration for the UE based on the SL traffic model obtained by the source cell.

In addition, optionally, the traffic model sent by the source base station to the target base station includes at least one of the following messages or a combination thereof: the traffic period, the offset, the PPPP, the PPPR, the message size, and the like. The traffic period represents a period of semi-persistent traffic of the UE when the UE is served by the source base station, and the traffic period in the traffic model may correspond to a resource period of the SPS/GF resource. The offset is a time offset of the traffic relative to an SFN 0, and the offset may correspond to an effective moment of the SPS/GF resource. The PPPP and the PPPR respectively represent a time priority requirement and a relative reliability requirement of the traffic. The frequency of interest may assist the base station in configuring a carrier used for CA, and the parameter PPPR may assist the base station in determining whether to use duplication. For example, duplication is used when the PPPR is lower than a specific value. The message size indicates a packet size of the traffic.

In addition, the source base station may further include, in the HO request message, information about the frequency in which the UE is interested, so that the target base station configures the SL CA for the UE. The source base station may further include the PPPR information in the HO request message, so that the target base station configures the SL duplication for the UE.

In addition, the HO request message carries the CBR measurement result and the GPS information of the UE, to assist the target base station in scheduling. The CBR measurement result may include a measurement result of a resource pool used in a mode 3 and a measurement result of a resource pool used in a mode 4.

Optionally, when the resource configuration information of the exceptional pool of the target cell is carried in the HO ACK on the X2 interface, whether the exceptional pool is used in an LTE standard or an NR standard needs to be further indicated. This is because in existing deployment, same UE may have both an LTE SL capability and an NR SL capability. Therefore, the target base station needs to indicate a standard corresponding the resource pool of the exceptional pool. In addition, when performing RRC reconfiguration on the UE, the source base station also needs to further indicate a standard in which the configured exceptional pool is used. Therefore, when receiving the resource, the UE performs adaptation by using a corresponding sending parameter.

It can be learned from the example description in the foregoing embodiment that, after the V-UE is handed over to the target cell, the target cell directly configures the SL SPS/GF configuration information for the UE based on the SL traffic model, so that processes of re-measuring an SL and reconfiguring a resource after the V-UE is handed over to the target cell are reduced, and a delay is effectively reduced. This solution can ensure that the received SL SPS/GF resource can be used when the UE accesses the target base station. After the UE successfully accesses the target base station, the UE continues to report parameters such as the traffic model to assist the base station in configuration updating.

FIG. 5 is another schematic flowchart of interaction between UE, a source base station, and a target base station according to an embodiment of this application. In this embodiment, a source cell notifies a target cell of related information such as an SL traffic model by using an HO request carrying the related information, and the target cell directly configures SL SPS/GF configuration information for the UE by using an HO command, to send data in a handover process. In the handover process, sending is performed on a resource scheduled by the base station rather than randomly performed on an exceptional resource, thereby improving transmission reliability. An SPS/GF resource is scheduling resource obtained by the base station based on a traffic model parameter. Resources in the exceptional pool are fixed and decoupled from traffic and the like.

A handover procedure shown in FIG. 5 may include the following processes:
S11. The V-UE sends a measurement report to the source base station to trigger a handover.
S12. The source base station determines, based on a measurement result reported by the UE, to start a handover procedure, and sends an HO request to the target base station. The measurement result includes the measurement report. The HO request carries at least one of the following information: a traffic model: a traffic period, an offset, a PPPP, PPPR, a message size, or the like; inter-node synchronization information: an inter-node SFN offset used to assist in SPS offset configuration; a frequency of interest; a CBR measurement result; or GPS information.

The offset in the traffic model is a time offset of traffic relative to an SFN 0, and is equivalent to an arrival moment of the traffic. The inter-node SFN offset indicates a synchronization time offset between two base stations. The inter-node synchronization information may be periodically reported by the UE, or may be reported by the UE at a single time. Either a periodic reporting case or a single reporting case may be configured by a base station. For example, in the periodic reporting case, the base station needs to configure a reporting period. For example, the base station may configure the UE to report the information. For example, the source base station configures the UE to measure the SFN offset, and configures a resource for reporting the offset. The UE reports the inter-node SFN offset to the source base station by using signaling such as RRC reconfiguration information.

S13. The target base station sends a handover request feedback to the source base station.

SL SPS/GF resource configuration information of the target cell is carried in an HO ACK on an X2 interface, where the SPS/GF resource configuration information includes a time-frequency resource, a period, an offset, an MCS, transmit power, and the like. An SL CA configuration and an SL duplication configuration of the target cell may further be carried through the X2 interface. A candidate exceptional resource may further be carried.

S14. The source base station sends RRC reconfiguration information to the V-UE, performs RRC reconfiguration, requires the V-UE to perform the handover, and configures an SPS/GF resource.

S15. The UE initiates access to the target base station, and performs the handover.

Because the SPS/GF resource is determined based on the traffic model reported by the UE, that is, when the UE receives periodic traffic at a specific moment, the UE may send the traffic by using the configured SPS/GF resource, and send data by using a sending parameter indicated in the configured SPS/GF resource. For example, the sending parameter may include a modulation and coding scheme (Modulation and Coding Schemes, MCS) and transmit power. If the UE is configured to use a mode 3 for transmission in the target cell, the UE uses an SPS/GF configuration of the source cell for transmission from a moment at which HO configuration information is received by the UE to a moment at which RRC reconfiguration is performed on the target cell.

When the HO fails, the candidate exceptional resource is used for sending, or SPS is continuously used for sending. The SPS/GF configuration mentioned in this embodiment of this application is determined by the target cell based on the traffic model. The configuration is transmitted to the source base station and is configured by using a mobilitycontrolinfo information element in the RRC reconfiguration information.

If the UE is configured to use a mode 4 for transmission in the target cell, the UE uses an SPS/GF configuration of the source cell for transmission from a moment at which HO configuration information is received by the UE to a moment at which a sensed resource is obtained by the UE.

When the HO fails, the candidate exceptional resource is used for sending, or the SPS/GF resource is continuously used for sending.

In some embodiments of this application, the UE may further perform mode switching between a plurality of modes. For example, when the UE switches from the mode 3 to the mode 4, the UE may perform resource transmission by using the SPS/GF resource in a mode switching process, until the UE senses an available transmission resource in a resource pool that is for the mode 4.

In addition, optionally, the traffic model sent by the source base station to the target base station includes at least one of the following messages or a combination thereof: the traffic period, the offset, the PPPP, the PPPR, the message size, and the like. The traffic period represents a period of semi-persistent traffic of the UE when the UE is served by the source base station. The offset is a time offset of the traffic relative to the SFN 0. The PPPP and the PPPR respectively represent a time priority requirement and a relative reliability requirement of the traffic. The message size indicates a packet size of the traffic.

Because in the handover process, the UE needs to use the SPS/GF information configured by the target base station, and a synchronization error exists between the source base station and the target base station, the synchronization error between the two base stations needs to be aligned, so that adaptive offset information can be configured to match traffic. Therefore, the UE needs to measure an SFN offset between the two base stations and report the SFN offset to the source base station. Optionally, the UE may complete reporting in a manner configured by the base station or in an autonomous manner. The reporting may be one-time reporting or periodic reporting, and may be carried in signaling such as RRC signaling or a MAC CE. In addition, the source base station needs to send the synchronization error (SFN offset) to the target base station by using the HO request message.

In addition, the source base station may further include, in the HO request message, information about the frequency in which the UE is interested, so that the target base station configures the SL CA for the UE. The source base station may further include the PPPR information in the HO request message, so that the target base station configures the SL duplication for the UE.

In addition, the HO request message carries the CBR measurement result and the GPS information of the UE, to assist the target base station in scheduling. The CBR measurement result may include a measurement result of a resource pool used in a mode 3 and a measurement result of a resource pool used in a mode 4.

Optionally, when the target base station uses the HO ACK on the X2 interface to carry the SL SPS/GF resource configuration information of the target cell, the target base station needs to send one or more pieces of SPS/GF configuration information to the source base station. Each piece of GF configuration information includes at least one of the following information: a time-frequency resource, a period, and an offset, an MCS, transmit power, and the like. Each piece of SPS information includes a period, an offset, a time domain resource location, a frequency domain resource location, an MCS level, and the like. If the UE supports a plurality of configurations, parameters in each configuration are the same, but values of the parameter are different. In this case, a condition ID of each of the plurality of configurations needs to be identified. If the UE needs to send a plurality of different types of traffic, the UE may request a plurality of resources, and the target base station may correspondingly configure a plurality of resources during resource configuration.

Optionally, when the resource configuration information of the exceptional pool of the target cell is carried in the HO ACK on the X2 interface, whether the exceptional pool is used in an LTE standard or an NR standard needs to be further indicated. This is because in existing deployment, same UE may have both an LTE SL capability and an NR SL capability. Therefore, the target base station needs to indicate a standard corresponding the resource pool of the exceptional pool. In addition, when performing RRC reconfiguration on the UE, the source base station also needs to further indicate a standard in which the configured exceptional pool is used. Therefore, when receiving the resource, the UE performs adaptation by using a corresponding sending parameter.

Effective moment of the SPS/GF configuration: Optionally, when the UE receives the RRC reconfiguration information of the source base station, the UE starts to perform sending by using the SPS/GF configuration of the source cell after receiving the HO configuration information. Alternatively, the SPS/GF configuration starts to take effect after the UE feeds back to the target base station that the configuration is completed. Alternatively, the UE starts to perform sending by using the SPS/GF configuration of the source cell after receiving an RAR message from the target cell or an MSG4 message from the target cell. Alternatively, when the UE performs a conditional HO (that is, the UE initiates a handover to the target cell when a special condition is satisfied), the effective moment of the SPS/GF configuration is a moment at which the UE satisfies a condition/threshold configured by the base station or predefined. Ineffective moment of the SPS/GF configuration: In this case, two cases may be considered. When the UE is configured to be in the mode 3 in the target base station, the ineffective moment of the SPS/GF configuration is a moment at which RRC SPS/GF reconfiguration is performed on the target cell. When the UE is configured to be in the mode 4 in the target base station, the ineffective moment of the SPS/GF configuration is a moment at which the UE obtains an available resource after sensing resources in the mode 4 in the target cell.

In addition, optionally, when the HO process of the UE fails, if there is a configured exceptional resource for the UE, the UE may roll back to the exceptional resource for sending, and use the SPS/GF resource in the handover process. If the handover fails and there is an allocated exceptional pool resource, the exceptional pool resource can be used. If there is no exceptional resource for the UE, the UE may perform sending by using an SPS/GF resource that is actually of the target cell but still configured by the source cell. Alternatively, the UE may send an HO failure message to the source base station to indicate the base station to reconfigure a sending resource. This is an HO failure scenario. In this case, a resource depends on an implementation behavior of the source base station, and may be a dynamically scheduled resource, or may be a semi-static SPS/GF resource.

It can be learned from the foregoing example description that the SPS/GF resource configured by the target base station is used in the handover process, so that a conflict probability is reduced, and transmission reliability is improved.

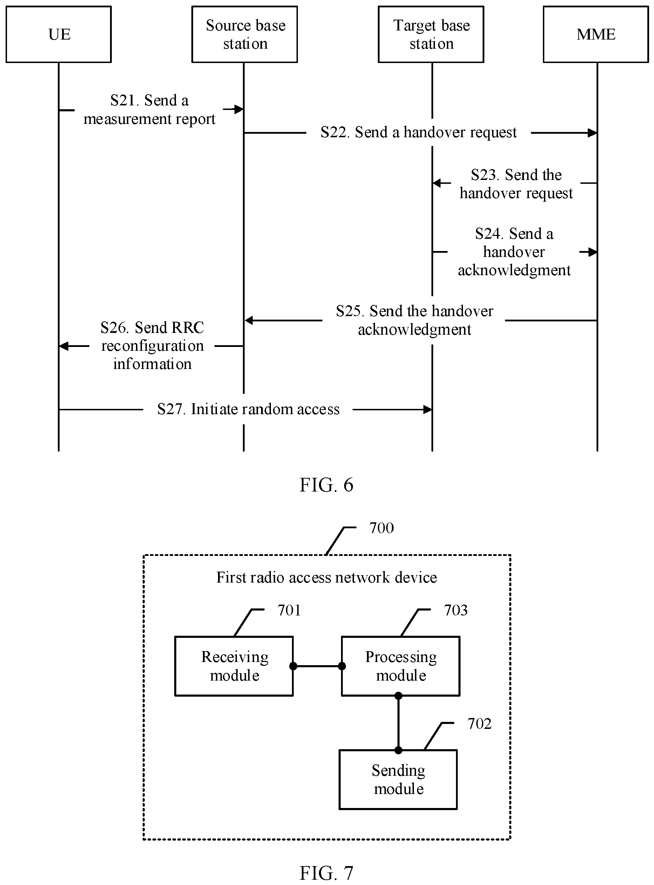

FIG. 6 is a schematic flowchart of interaction between UE, a source base station, a target base station, and an MME according to an embodiment of this application.
S21. The V-UE sends a measurement report to the source base station to trigger a handover.
S22. The source base station determines, based on a measurement result reported by the UE, to start a handover procedure, and sends an HO request to an MME
S23. The MME sends the HO request to the target base station.
S24. The target base station sends an HO acknowledgment to the MME
S25. The MME sends the HO acknowledgment to the source base station.
S26. The source base station sends RRC reconfiguration information to the V-UE, performs RRC reconfiguration, requires the V-UE to perform the handover, and configures resource information of an exceptional pool.
S27. The UE initiates random access to the target base station, and performs the handover.

From a moment at which HO configuration information is received by the UE, and before a timer T304 expires, the UE randomly selects a resource in the exceptional pool for transmission. T304 starts when the UE receives the RRC reconfiguration information including mobility control information (mobilityControlInfo), and stops when random access to a new cell is completed.

If an X2 interface between a source cell and a target cell is unavailable or there is no X2 interface, the HO request and the HO ACK are transmitted through an S1 interface and forwarded by the MME. The S1 interface is an interface between the base station and the MME

In addition, to adapt to base stations of different standards, corresponding carriers of the SL traffic model information and the SPS/GF configuration information in the foregoing embodiments are changed to the S1 interface. That is, the SL traffic model information and the SPS/GF configuration information are transmitted through the S1 interface. The base station in the foregoing embodiments is not limited to an eNB in LTE or a gNB in NR. A type of a core network connected to the base station is not limited either, and may be an evolved packet core (Evolved Packet Core, EPC) in a 4G system or a 5G core (5G Core, 5GC) in a 5G system.

In addition, to adapt to different handover scenarios, the HO request message and the HO ACK message in the foregoing embodiments may be further replaced with common transmission messages between base stations. Specific representation forms of the HO request message and the HO ACK message may be an HO request and an HO ACK.

If a 5G air interface is used, X2, S 1, and the MME need to be replaced with Xn, NG, and an AMF

In this embodiment of this application, the HO request is used by the source base station to send at least one of the following information to the target base station through X2/Xn (the X2 interface is available) or S1/NG (the X2 interface is unavailable):
a traffic model: a traffic period, an offset, a PPPP, PPPR, and the like; inter-node synchronization information: inter-node SFN offset, used to assist in SPS offset configuration, where because in the handover process, the UE needs to use SPS/GF information configured by the target base station, and a synchronization error exists between the source base station and the target base station, the synchronization error between the two base stations needs to be aligned, so that adaptive offset information can be configured to match traffic;
information about a frequency in which the UE is interested;
a CBR measurement result; and
GPS information.

The HO ACK is used by the target base station to send at least one of the following information to the source base station through X2/Xn (the X2 interface is available) or S1/NG (the X2 interface is unavailable): The HO ACK on the X2 interface is used to carry SL SPS/GF resource configuration information of the target cell, and the X2 interface is used to carry an SL CA configuration and an SL duplication configuration of the target cell.

It can be learned from the foregoing example description that the SPS/GF resource configured by the target base station is used in the handover process, so that a conflict probability is reduced, and reliability is improved. This reduces a delay in re-measuring an SL and reconfiguring an SPS/GF resource after a handover to a new cell.

It should be noted that, for brief description, the foregoing method embodiments are represented as a series of actions. However, a person skilled in the art should appreciate that this application is not limited to the described order of the actions, because according to this application, some steps may be performed in another order or simultaneously. It should be further appreciated by a person skilled in the art that the embodiments described in this specification all belong to example embodiments, and the involved actions and modules are not necessarily required by this application. To better implement the foregoing solutions in the embodiments of this application, the following further provides related apparatuses for implementing the foregoing solutions.

Referring to FIG. 7, an embodiment of this application provides a radio access network device, where the radio access network device is specifically a first radio access network device 700, and the first radio access network device 700 includes:
a receiving module 701, configured to receive traffic model information of a first terminal device that is sent by the first terminal device;
a sending module 702, configured to send the traffic model information of the first terminal device to a second radio access network device, where
the receiving module 701 is configured to receive first resource configuration information sent by the second radio access network device; and
a processing module 703, configured to determine, based on the first resource configuration information, a transmission resource required by the first terminal device to transmit data on a sidelink SL in a handover process, where the handover process is a process in which the first terminal device is handed over from the first radio access network device to the second radio access network device, and the sidelink is a communication link between the first terminal device and a second terminal device, where
the sending module 702 is configured to send a configuration message to the first terminal device.

The configuration message includes the first resource configuration information.

Alternatively, the configuration message includes second resource configuration information generated by the first radio access network device based on the first resource configuration information, and the second resource configuration information includes the transmission resource required by the first terminal device to transmit data on the sidelink in the handover process.

In some embodiments of this application, the sending module 702 is further configured to perform any one or more of the following operations:
sending, to the second radio access network device, information about a frequency supported by the first terminal device;
sending, to the second radio access network device, a channel busy ratio CBR measurement result generated by the first terminal device;
sending location information of the first terminal device to the second radio access network device;
sending inter-node synchronization information to the second radio access network device, where the inter-node synchronization information is used to indicate information about a system frame number SFN offset between the first radio access network device and the second radio access network device; or
sending network standard request information to the second radio access network device, where the network standard request information is used to request a network standard corresponding to the transmission resource from the second radio access network device.

In some embodiments of this application, any one or more of the following information is carried in a handover request: the traffic model information, the information about the frequency supported by the first terminal device, the CBR measurement result, the location information of the first terminal device, the inter-node synchronization information, or the network standard request information.

The handover request is sent by the first radio access network device to the second radio access network device.

In some embodiments of this application, the receiving module 701 is further configured to perform the following operation:
receiving network standard indication information sent by the second radio access network device, where the network standard indication information is used to indicate the network standard corresponding to the transmission resource; or
receiving third resource configuration information sent by the second radio access network device, where the third resource configuration information includes at least one of the following information: carrier
aggregation CA configuration information or duplication configuration information.

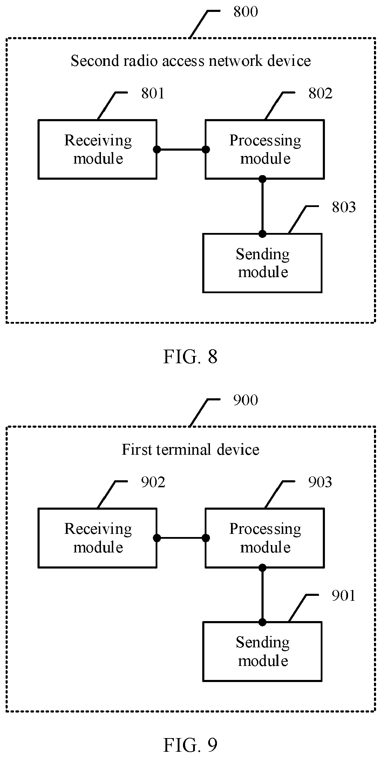

Referring to FIG. 8, an embodiment of this application provides a radio access network device, where the radio access network device is specifically a second radio access network device 800, and the second radio access network device 800 includes:
a receiving module 801, configured to receive traffic model information of a first terminal device that is sent by a first radio access network device;
a processing module 802, configured to determine, based on the traffic model information of the first terminal device, a transmission resource required by the first terminal device to transmit data on a sidelink SL in a handover process, where the handover process is a process in which the first terminal device is handed over from the first radio access network device to the second radio access network device, and the sidelink is a communication link between the first terminal device and a second terminal device; and
a sending module 803, configured to send first resource configuration information to the first radio access network device, where the first resource configuration information includes the transmission resource.

In some embodiments of this application, the receiving module 801 is further configured to perform any one or more of the following operations:
receiving information that is about a frequency supported by the first terminal device and that is sent by the first radio access network device;
receiving a channel busy ratio CBR measurement result that is generated by the first terminal device and that is sent by the first radio access network device;
receiving location information of the first terminal device that is sent by the first radio access network device;
receiving inter-node synchronization information sent by the first radio access network device, where the inter-node synchronization information is used to indicate information about a system frame number SFN offset between the first radio access network device and the second radio access network device; or
receiving network standard request information sent by the first radio access network device, where the network standard request information is used to request a network standard corresponding to the transmission resource from the second radio access network device.

In some embodiments of this application, the processing module 802 is further configured to perform any one or more of the following operations:
configuring a carrier for the first terminal device based on the information about the frequency supported by the first terminal device;
determining a location of the transmission resource for the first terminal device based on the CBR measurement result;
determining, for the first terminal device based on the location information of the first terminal device, a resource location corresponding to an area in which the first terminal device is located; or correcting a time domain location of the transmission resource based on the inter-node synchronization information.

In some embodiments of this application, the sending module 803 is further configured to perform the following operation:
sending network standard indication information to the first radio access network device, where the network standard indication information is used to indicate the network standard corresponding to the transmission resource; or
sending third resource configuration information to the first radio access network device, where the third resource configuration information includes at least one of the following information: carrier aggregation CA configuration information or duplication configuration information.

Referring to FIG. 9, an embodiment of this application provides a terminal device, where the terminal device is specifically a first terminal device 900, and the first terminal device 900 includes:
a sending module 901, configured to send traffic model information of the first terminal device to a first radio access network device;
a receiving module 902, configured to receive a configuration message sent by the first radio access network device; and
a processing module 903, configured to determine, based on the configuration message, first resource configuration information, or second resource configuration information generated by the first radio access network device based on the first resource configuration information, where the first resource configuration information includes a transmission resource required by the first terminal device to transmit data on a sidelink SL in a handover process, the handover process is a process in which the first terminal device is handed over from the first radio access network device to a second radio access network device, and the sidelink is a communication link between the first terminal device and a second terminal device; and the second resource configuration information includes the transmission resource required by the first terminal device to transmit data on the sidelink in the handover process, where the sending module 901 is configured to transmit data to the second terminal device by using the transmission resource.

In some embodiments of this application, the sending module 901 is further configured to perform any one or more of the following operations:
sending, to the first radio access network device, information about a frequency supported by the first terminal device;
sending, to the first radio access network device, a channel busy ratio CBR measurement result generated by the first terminal device;
sending location information of the first terminal device to the first radio access network device;
sending inter-node synchronization information to the first radio access network device, where the inter-node synchronization information is used to indicate information about a system frame number SFN offset between the first radio access network device and the second radio access network device; or sending network standard request information to the first radio access network device, where the network standard request information is used to request a network standard corresponding to the transmission resource from the second radio access network device.

In some embodiments of this application, the receiving module 902 is further configured to perform the following operation:
receiving network standard indication information sent by the first radio access network device, where the network standard indication information is used to indicate the network standard corresponding to the transmission resource; or
receiving third resource configuration information sent by the first radio access network device, where the third resource configuration information includes at least one of the following information: carrier aggregation CA configuration information or duplication configuration information.

In some embodiments of this application, the sending module 901 is further configured to perform the following operation:
when the first terminal device uses a mode 3 for transmission, transmitting data to the second terminal device by using the transmission resource from a moment at which the configuration message is received by the first terminal device to a moment at which a cell to which the first terminal device is handed over is reconfigured; or
when the first terminal device uses a mode 4 for transmission, transmitting data to the second terminal device by using the transmission resource from a moment at which the configuration message is received by the first terminal device to a moment at which a sensed resource is obtained by the first terminal device.

In some embodiments of this application, a communication connection is established between the first radio access network device and a core network device, and a communication connection is established between the second radio access network device and the core network device.

Information is forwarded between the first radio access network device and the second radio access network device by using the core network device.

In some embodiments of this application, the traffic model information further includes any one or more of the following information: traffic period information, information about a time offset of traffic relative to a system frame number, sidelink data packet priority PPPP information, sidelink data packet reliability PPPR information, or traffic packet size information.

In some embodiments of this application, as shown in FIG. 8, the processing module 802 of the second radio access network device is further configured to perform any one or more of the following operations:
determining a resource period of the transmission resource based on the traffic period information;
determining a time domain location of the transmission resource relative to a start system frame number based on the information about the time offset of the traffic relative to the system frame number;
determining, based on the PPPP information, a priority of data carried on the transmission resource;
determining, based on the PPPR information, a reliability requirement corresponding to the transmission resource and channel quality corresponding to the transmission resource; or
determining, based on the traffic packet size information, an amount of traffic data carried on the transmission resource.

It should be noted that content such as information exchange between the modules/units of the apparatus and the execution processes thereof is based on the same idea as the method embodiments of this application, and produces the same technical effects as the method embodiments of this application. For the specific content, refer to the foregoing descriptions in the method embodiments of this application. Details are not described herein again.

An embodiment of this application further provides a computer storage medium. The computer storage medium stores a program. The program is executed to perform some or all of the steps described in the method embodiments.

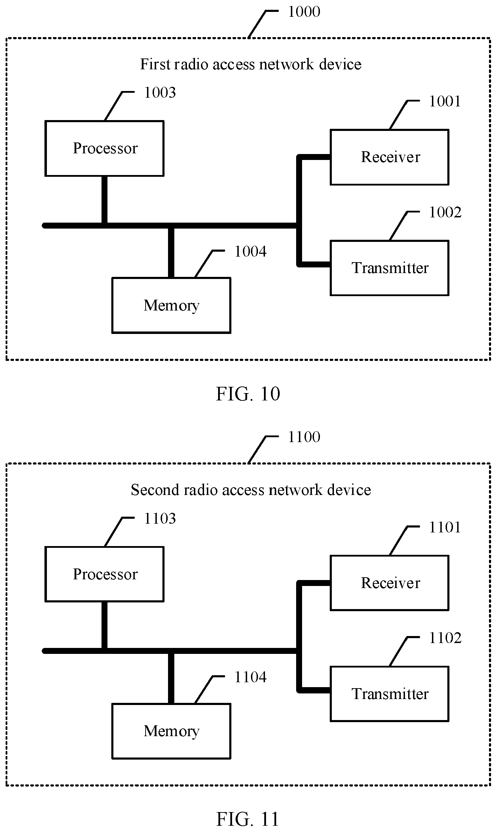

The following describes another first radio access network device provided in an embodiment of this application. Referring to FIG. 10, the first radio access network device 1000 includes:
a receiver 1001, a transmitter 1002, a processor 1003, and a memory 1004 (there may be one or more processors 1003 in the first radio access network device 1000, and one processor is used as an example in FIG. 10). In some embodiments of this application, the receiver 1001, the transmitter 1002, the processor 1003, and the memory 1004 may be connected by using a bus or in another manner. In FIG. 10, a bus connection is used as an example.

The memory 1004 may include a read-only memory and a random access memory, and provide an instruction and data for the processor 1003. A part of the memory 1004 may further include a non-volatile random access memory (non-volatile random access memory, NVRAM). The memory 1004 stores an operating system and an operation instruction, an executable module or a data structure, a subset thereof, or an extended set thereof. The operation instruction may include various operation instructions to implement various operations. The operating system may include various system programs, to implement various basic services and process hardware-based tasks.

The processor 1003 controls an operation of the first radio access network device, and the processor 1003 may also be referred to as a central processing unit (central processing Unit, CPU). In a specific application, components of the first radio access network device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1003, or may be implemented by the processor 1003. The processor 1003 may be an integrated circuit chip and has a signal processing capability. In an implementation process, the steps in the foregoing methods may be completed by using a hardware integrated logic circuit in the processor 1003 or instructions in a form of software. The processor 1003 may be a general-purpose processor, a digital signal processor (digital signal processor, DSP), an application-specific integrated circuit (application specific integrated circuit, ASIC), a field-programmable gate array (field-programmable gate array, FPGA) or another programmable logical device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by using a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 1004, and the processor 1003 reads information in the memory 1004 and completes the steps in the foregoing methods in combination with hardware of the processor. The receiver 1001 may be configured to receive input digit or character information, and generate signal input related to a related setting and function control of the first radio access network device. The transmitter 1002 may be configured to output digit or character information by using an external interface.

In this embodiment of this application, the processor 1003 is configured to perform the data transmission method performed by the first radio access network device in the foregoing embodiments.

The following describes another second radio access network device provided in an embodiment of this application. Referring to FIG. 11, the second radio access network device 1100 includes:
a receiver 1101, a transmitter 1102, a processor 1103, and a memory 1104 (there may be one or more processors 1103 in the second radio access network device 1100, and one processor is used as an example in FIG. 11). In some embodiments of this application, the receiver 1101, the transmitter 1102, the processor 1103, and the memory 1104 may be connected by using a bus or in another manner. In FIG. 11, a bus connection is used as an example.

The memory 1104 may include a read-only memory and a random access memory, and provide an instruction and data for the processor 1103. Apart of the memory 1104 may further include an NVRAM. The memory 1104 stores an operating system and an operation instruction, an executable module or a data structure, a subset thereof, or an extended set thereof. The operation instruction may include various operation instructions to implement various operations. The operating system may include various system programs, to implement various basic services and process hardware-based tasks.

The processor 1103 controls an operation of the second radio access network device, and the processor 1103 may also be referred to as a CPU. In a specific application, components of the second radio access network device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1103, or may be implemented by the processor 1103. The processor 1103 of the second radio access network device may be an integrated circuit chip and has a signal processing capability. In an implementation process, the steps in the foregoing methods may be completed by using a hardware integrated logic circuit in the processor 1103 or instructions in a form of software. The processor 1103 may be a general-purpose processor, a DSP, an ASIC, an FPGA or another programmable logic device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by using a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor.

In this embodiment of this application, the processor 1103 is configured to perform the data transmission method performed by the second radio access network device in the foregoing embodiments.

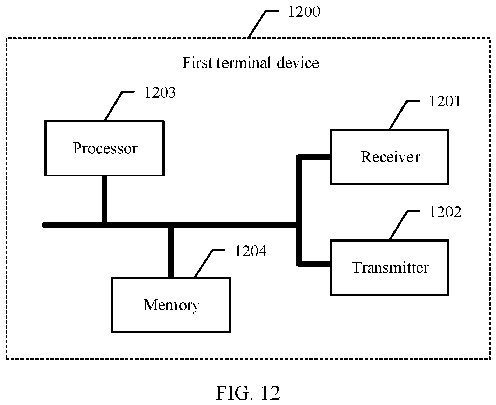

The following describes another first terminal device provided in an embodiment of this application. Referring to FIG. 12, the first terminal device 1200 includes:
a receiver 1201, a transmitter 1202, a processor 1203, and a memory 1204 (there may be one or more processors 1203 in the first terminal device 1200, and one processor is used as an example in FIG. 12). In some embodiments of this application, the receiver 1201, the transmitter 1202, the processor 1203, and the memory 1204 may be connected by using a bus or in another manner. In FIG. 12, a bus connection is used as an example.

The memory 1204 may include a read-only memory and a random access memory, and provide an instruction and data for the processor 1203. A part of the memory 1204 may further include an NVRAM. The memory 1204 stores an operating system and an operation instruction, an executable module or a data structure, a subset thereof, or an extended set thereof. The operation instruction may include various operation instructions to implement various operations. The operating system may include various system programs, to implement various basic services and process hardware-based tasks.

The processor 1203 controls operations of the first terminal device, and the processor 1203 may also be referred to as a CPU. In a specific application, the components of the first terminal device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 1203, or may be implemented by the processor 1203. The processor 1203 of the first terminal device may be an integrated circuit chip and has a signal processing capability. In an implementation process, the steps in the foregoing methods may be completed by using a hardware integrated logic circuit in the processor 1203 or instructions in a form of software. The processor 1203 may be a general-purpose processor, a DSP, an ASIC, an FPGA or another programmable logic device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by using a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204 and completes the steps in the foregoing methods in combination with hardware of the processor.

In this embodiment of this application, the processor 1203 is configured to perform the data transmission method performed by the first terminal device in the foregoing embodiments.

In another possible design, when the apparatus is a chip in a terminal, the chip includes a processing unit and a communications unit. The processing unit may be, for example, a processor. The communications unit may be, for example, an input/output interface, a pin, or a circuit. The processing unit may execute a computer-executable instruction stored in a storage unit, so that the chip in the terminal is enabled to perform the wireless communication method according to any one of the possible implementations of the first aspect. Optionally, the storage unit may be a storage unit in the chip, such as a register or a buffer, or the storage unit may be a storage unit in the terminal but outside the chip, such as a read-only memory (read-only memory, ROM), another type of static storage device capable of storing static information and instructions, or a random access memory (random access memory, RAM).

Any processor mentioned above may be a general-purpose central processing unit (Central Processing Unit, CPU), a microprocessor, an application-specific integrated circuit (application-specific integrated circuit, ASIC), or one or more integrated circuits for controlling program executions of the wireless communication method according to the first aspect.

In addition, it should be noted that the described apparatus embodiments are merely examples. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of the embodiments. In addition, in the accompanying drawings of the apparatus embodiments provided in this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by corresponding hardware. Moreover, a specific hardware structure used to achieve a same function may be of various forms, for example, in a form of an analog circuit, a digital circuit, or a dedicated circuit. However, as for this application, software program implementation is a better implementation in most cases. Based on such an understanding, the technical solutions of this application essentially or the part contributing to the current technology may be implemented in a form of a software product. The computer software product is stored in a readable storage medium, such as a floppy disk, a USB flash drive, a removable hard disk, a read-only memory, a random access memory, a magnetic disk, or an optical disc of a computer, and includes several instructions for instructing a computer device (which may be a personal computer, a server, a network device, or the like) to perform the methods described in the embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

## Claims

1. A data transmission method, wherein the method is applied to a first radio access network device, and comprises:
receiving, by the first radio access network device, traffic model information of a first terminal device that is sent by the first terminal device;
sending, by the first radio access network device, the traffic model information of the first terminal device to a second radio access network device;
receiving, by the first radio access network device, first resource configuration information sent by the second radio access network device, wherein the first resource configuration information comprises a transmission resource required by the first terminal device to transmit data on a sidelink SL in a handover process, the handover process is a process in which the first terminal device is handed over from the first radio access network device to the second radio access network device, and the sidelink is a communication link between the first terminal device and a second terminal device; and
sending, by the first radio access network device, a configuration message to the first terminal device, wherein
the configuration message comprises the first resource configuration information; or
the configuration message comprises second resource configuration information generated by the first radio access network device based on first resource configuration information, and the second resource configuration information comprises the transmission resource required by the first terminal device to transmit data on the sidelink in the handover process.

2. The method according to claim 1, wherein the method further comprises any one or more of the following operations:
sending, by the first radio access network device to the second radio access network device, information about a frequency supported by the first terminal device;
sending, by the first radio access network device to the second radio access network device, a channel busy ratio CBR measurement result generated by the first terminal device;
sending, by the first radio access network device, location information of the first terminal device to the second radio access network device;
sending, by the first radio access network device, inter-node synchronization information to the second radio access network device, wherein the inter-node synchronization information is used to indicate information about a system frame number SFN offset between the first radio access network device and the second radio access network device; or
sending, by the first radio access network device, network standard request information to the second radio access network device, wherein the network standard request information is used to request a network standard corresponding to the transmission resource from the second radio access network device.

3. The method according to claim 1 or 2, wherein any one or more of the following information is carried in a handover request: the traffic model information, the information about the frequency supported by the first terminal device, the CBR measurement result, the location information of the first terminal device, the inter-node synchronization information, or the network standard request information; and
the handover request is sent by the first radio access network device to the second radio access network device.

4. The method according to any one of claims 1 to 3, wherein the method further comprises:
receiving, by the first radio access network device, network standard indication information sent by the second radio access network device, wherein the network standard indication information is used to indicate the network standard corresponding to the transmission resource; or
receiving, by the first radio access network device, third resource configuration information sent by the second radio access network device, wherein the third resource configuration information comprises at least one of the following information: carrier aggregation CA configuration information or duplication configuration information.

5. A data transmission method, wherein the method is applied to a second radio access network device, and comprises:
receiving, by the second radio access network device, traffic model information of a first terminal device that is sent by a first radio access network device;
determining, by the second radio access network device based on the traffic model information of the first terminal device, a transmission resource required by the first terminal device to transmit data on a sidelink SL in a handover process, wherein the handover process is a process in which the first terminal device is handed over from the first radio access network device to the second radio access network device, and the sidelink is a communication link between the first terminal device and a second terminal device; and
sending, by the second radio access network device, first resource configuration information to the first radio access network device, wherein the first resource configuration information comprises the transmission resource.

6. The method according to claim 5, wherein the method further comprises:
receiving, by the second radio access network device, information that is about a frequency supported by the first terminal device and that is sent by the first radio access network device;
receiving, by the second radio access network device, a channel busy ratio CBR measurement result that is generated by the first terminal device and that is sent by the first radio access network device;
receiving, by the second radio access network device, location information of the first terminal device that is sent by the first radio access network device;
receiving, by the second radio access network device, inter-node synchronization information sent by the first radio access network device, wherein the inter-node synchronization information is used to indicate information about a system frame number SFN offset between the first radio access network device and the second radio access network device; or
receiving, by the second radio access network device, network standard request information sent by the first radio access network device, wherein the network standard request information is used to request a network standard corresponding to the transmission resource from the second radio access network device.

7. The method according to claim 6, wherein the method further comprises:
configuring, by the second radio access network device, a carrier for the first terminal device based on the information about the frequency supported by the first terminal device;
determining, by the second radio access network device, a location of the transmission resource for the first terminal device based on the CBR measurement result;
determining, by the second radio access network device for the first terminal device based on the location information of the first terminal device, a resource location corresponding to an area in which the first terminal device is located; or
correcting, by the second radio access network device, a time domain location of the transmission resource based on the inter-node synchronization information.

8. The method according to any one of claims 5 to 7, wherein the method further comprises:
sending, by the second radio access network device, network standard indication information to the first radio access network device, wherein the network standard indication information is used to indicate the network standard corresponding to the transmission resource; or
sending, by the second radio access network device, third resource configuration information to the first radio access network device, wherein the third resource configuration information comprises at least one of the following information: carrier aggregation CA configuration information or duplication configuration information.

9. A data transmission method, wherein the method is applied to a first terminal device, and comprises:
sending, by the first terminal device, traffic model information of the first terminal device to a first radio access network device;
receiving, by the first terminal device, a configuration message sent by the first radio access network device, wherein the configuration message comprises first resource configuration information; or the configuration message comprises second resource configuration information generated by the first radio access network device based on first resource configuration information, wherein the first resource configuration information comprises a transmission resource required by the first terminal device to transmit data on a sidelink SL in a handover process, the handover process is a process in which the first terminal device is handed over from the first radio access network device to a second radio access network device, and the sidelink is a communication link between the first terminal device and a second terminal device; and the second resource configuration information comprises the transmission resource required by the first terminal device to transmit data on the sidelink in the handover process; and
transmitting, by the first terminal device, data to the second terminal device by using the transmission resource.

10. The method according to claim 9, wherein the method further comprises any one or more of the following operations:
sending, by the first terminal device to the first radio access network device, information about a frequency supported by the first terminal device;
sending, by the first terminal device to the first radio access network device, a channel busy ratio CBR measurement result generated by the first terminal device;
sending, by the first terminal device, location information of the first terminal device to the first radio access network device;
sending, by the first terminal device, inter-node synchronization information to the first radio access network device, wherein the inter-node synchronization information is used to indicate information about a system frame number SFN offset between the first radio access network device and the second radio access network device; or
sending, by the first terminal device, network standard request information to the first radio access network device, wherein the network standard request information is used to request a network standard corresponding to the transmission resource from the second radio access network device.

11. The method according to claim 9 or 10, wherein the method further comprises:
receiving, by the first terminal device, network standard indication information sent by the first radio access network device, wherein the network standard indication information is used to indicate the network standard corresponding to the transmission resource; or
receiving, by the first terminal device, third resource configuration information sent by the first radio access network device, wherein the third resource configuration information comprises at least one of the following information: carrier aggregation CA configuration information or duplication configuration information.

12. The method according to any one of claims 9 to 11, wherein the transmitting, by the first terminal device, data to the second terminal device by using the transmission resource comprises:
when the first terminal device uses a mode 3 for transmission, transmitting, by the first terminal device, data to the second terminal device by using the transmission resource from a moment at which the configuration message is received by the first terminal device to a moment at which a cell to which the first terminal device is handed over is reconfigured; or
when the first terminal device uses a mode 4 for transmission, transmitting, by the first terminal device, data to the second terminal device by using the transmission resource from a moment at which the configuration message is received by the first terminal device to a moment at which a sensed resource is obtained by the first terminal device.

13. The method according to any one of claims 1 to 12, wherein a communication connection is established between the first radio access network device and a core network device, and a communication connection is established between the second radio access network device and the core network device; and
information is forwarded between the first radio access network device and the second radio access network device by using the core network device.

14. The method according to any one of claims 1 to 13, wherein the traffic model information comprises any one or more of the following information: traffic period information, information about a time offset of traffic relative to a system frame number, sidelink data packet priority PPPP information, sidelink data packet reliability PPPR information, or traffic packet size information.

15. The method according to claim 14, wherein the determining, by the second radio access network device based on the traffic model information of the first terminal device, a transmission resource required by the first terminal device to transmit data on a sidelink SL in a handover process comprises:
determining, by the second radio access network device, a resource period of the transmission resource based on the traffic period information;
determining, by the second radio access network device, a time domain location of the transmission resource relative to a start system frame number based on the information about the time offset of the traffic relative to the system frame number;
determining, by the second radio access network device based on the PPPP information, a priority of data carried on the transmission resource;
determining, by the second radio access network device based on the PPPR information, a reliability requirement corresponding to the transmission resource and channel quality corresponding to the transmission resource; or
determining, by the second radio access network device based on the traffic packet size information, an amount of traffic data carried on the transmission resource.

16. A radio access network device, wherein the radio access network device is specifically a first radio access network device, and the first radio access network device comprises:
a receiving module, configured to receive traffic model information of a first terminal device that is sent by the first terminal device;
a sending module, configured to send the traffic model information of the first terminal device to a second radio access network device, wherein
the receiving module is configured to receive first resource configuration information sent by the second radio access network device; and
a processing module, configured to determine, based on the first resource configuration information, a transmission resource required by the first terminal device to transmit data on a sidelink SL in a handover process, wherein the handover process is a process in which the first terminal device is handed over from the first radio access network device to the second radio access network device, and the sidelink is a communication link between the first terminal device and a second terminal device, wherein
the sending module is configured to send a configuration message to the first terminal device; and
the configuration message comprises the first resource configuration information; or
the configuration message comprises second resource configuration information generated by the first radio access network device based on first resource configuration information, and the second resource configuration information comprises the transmission resource required by the first terminal device to transmit data on the sidelink in the handover process.

17. The radio access network device according to claim 16, wherein the sending module is further configured to perform any one or more of the following operations:
sending, to the second radio access network device, information about a frequency supported by the first terminal device;
sending, to the second radio access network device, a channel busy ratio CBR measurement result generated by the first terminal device;
sending location information of the first terminal device to the second radio access network device;
sending inter-node synchronization information to the second radio access network device, wherein the inter-node synchronization information is used to indicate information about a system frame number SFN offset between the first radio access network device and the second radio access network device; or
sending network standard request information to the second radio access network device, wherein the network standard request information is used to request a network standard corresponding to the transmission resource from the second radio access network device.

18. The radio access network device according to claim 16 or 17, wherein any one or more of the following information is carried in a handover request: the traffic model information, the information about the frequency supported by the first terminal device, the CBR measurement result, the location information of the first terminal device, the inter-node synchronization information, or the network standard request information; and
the handover request is sent by the first radio access network device to the second radio access network device.

19. The radio access network device according to any one of claims 16 to 18, wherein the receiving module is further configured to perform the following operation:
receiving network standard indication information sent by the second radio access network device, wherein the network standard indication information is used to indicate the network standard corresponding to the transmission resource; or
receiving third resource configuration information sent by the second radio access network device, wherein the third resource configuration information comprises at least one of the following information: carrier aggregation CA configuration information or duplication configuration information.

20. A radio access network device, wherein the radio access network device is specifically a second radio access network device, and the second radio access network device comprises:
a receiving module, configured to receive traffic model information of a first terminal device that is sent by a first radio access network device;
a processing module, configured to determine, based on the traffic model information of the first terminal device, a transmission resource required by the first terminal device to transmit data on a sidelink SL in a handover process, wherein the handover process is a process in which the first terminal device is handed over from the first radio access network device to the second radio access network device, and the sidelink is a communication link between the first terminal device and a second terminal device; and
a sending module, configured to send first resource configuration information to the first radio access network device, wherein the first resource configuration information comprises the transmission resource.

21. The radio access network device according to claim 20, wherein the receiving module is further configured to perform any one or more of the following operations:
receiving information that is about a frequency supported by the first terminal device and that is sent by the first radio access network device;
receiving a channel busy ratio CBR measurement result that is generated by the first terminal device and that is sent by the first radio access network device;
receiving location information of the first terminal device that is sent by the first radio access network device;
receiving inter-node synchronization information sent by the first radio access network device, wherein the inter-node synchronization information is used to indicate information about a system frame number SFN offset between the first radio access network device and the second radio access network device; or
receiving network standard request information sent by the first radio access network device, wherein the network standard request information is used to request a network standard corresponding to the transmission resource from the second radio access network device.

22. The radio access network device according to claim 21, wherein the processing module is further configured to perform any one or more of the following operations:
configuring a carrier for the first terminal device based on the information about the frequency supported by the first terminal device;
determining a location of the transmission resource for the first terminal device based on the CBR measurement result;
determining, for the first terminal device based on the location information of the first terminal device, a resource location corresponding to an area in which the first terminal device is located; or
correcting a time domain location of the transmission resource based on the inter-node synchronization information.

23. The radio access network device according to any one of claims 20 to 22, wherein the sending module is further configured to perform the following operation:
sending network standard indication information to the first radio access network device, wherein the network standard indication information is used to indicate the network standard corresponding to the transmission resource; or
sending third resource configuration information to the first radio access network device, wherein the third resource configuration information comprises at least one of the following information: carrier aggregation CA configuration information or duplication configuration information.

24. A terminal device, wherein the terminal device is specifically a first terminal device, and the first terminal device comprises:
a sending module, configured to send traffic model information of the first terminal device to a first radio access network device;
a receiving module, configured to receive a configuration message sent by the first radio access network device; and
a processing module, configured to determine, based on the configuration message, first resource configuration information, or second resource configuration information generated by the first radio access network device based on first resource configuration information, wherein the first resource configuration information comprises a transmission resource required by the first terminal device to transmit data on a sidelink SL in a handover process, the handover process is a process in which the first terminal device is handed over from the first radio access network device to a second radio access network device, and the sidelink is a communication link between the first terminal device and a second terminal device; and the second resource configuration information comprises the transmission resource required by the first terminal device to transmit data on the sidelink in the handover process, wherein
the sending module is configured to transmit data to the second terminal device by using the transmission resource.

25. The terminal device according to claim 24, wherein the sending module is further configured to perform any one or more of the following operations:
sending, to the first radio access network device, information about a frequency supported by the first terminal device;
sending, to the first radio access network device, a channel busy ratio CBR measurement result generated by the first terminal device;
sending location information of the first terminal device to the first radio access network device;
sending inter-node synchronization information to the first radio access network device, wherein the inter-node synchronization information is used to indicate information about a system frame number SFN offset between the first radio access network device and the second radio access network device; or
sending network standard request information to the first radio access network device, wherein the network standard request information is used to request a network standard corresponding to the transmission resource from the second radio access network device.

26. The terminal device according to claim 24 or 25, wherein the receiving module is further configured to perform the following operation:
receiving network standard indication information sent by the first radio access network device, wherein the network standard indication information is used to indicate the network standard corresponding to the transmission resource; or
receiving third resource configuration information sent by the first radio access network device, wherein the third resource configuration information comprises at least one of the following information: carrier aggregation CA configuration information or duplication configuration information.

27. The terminal device according to any one of claims 24 to 26, wherein the sending module is further configured to perform the following operation:
when the first terminal device uses a mode 3 for transmission, transmitting data to the second terminal device by using the transmission resource from a moment at which the configuration message is received by the first terminal device to a moment at which a cell to which the first terminal device is handed over is reconfigured; or
when the first terminal device uses a mode 4 for transmission, transmitting data to the second terminal device by using the transmission resource from a moment at which the configuration message is received by the first terminal device to a moment at which a sensed resource is obtained by the first terminal device.

28. The terminal device according to any one of claims 16 to 27, wherein a communication connection is established between the first radio access network device and a core network device, and a communication connection is established between the second radio access network device and the core network device; and
information is forwarded between the first radio access network device and the second radio access network device by using the core network device.

29. The device according to any one of claims 16 to 28, wherein the traffic model information comprises any one or more of the following information: traffic period information, information about a time offset of traffic relative to a system frame number, sidelink data packet priority PPPP information, sidelink data packet reliability PPPR information, or traffic packet size information.

30. The device according to claim 29, wherein the processing module of the second radio access network device is further configured to perform any one or more of the following operations:
determining a resource period of the transmission resource based on the traffic period information;
determining a time domain location of the transmission resource relative to a start system frame number based on the information about the time offset of the traffic relative to the system frame number;
determining, based on the PPPP information, a priority of data carried on the transmission resource;
determining, based on the PPPR information, a reliability requirement corresponding to the transmission resource and channel quality corresponding to the transmission resource; or
determining, based on the traffic packet size information, an amount of traffic data carried on the transmission resource.

31. A radio access network device, wherein the radio access network device is specifically a first radio access network device, and the first radio access network device comprises: at least one processor, configured to: couple to a memory, read an instruction in the memory, and execute the instruction to implement the method according to any one of claims 1 to 4.

32. The radio access network device according to claim 31, wherein the radio access network device further comprises the memory.

33. A radio access network device, wherein the radio access network device is specifically a second radio access network device, and the second radio access network device comprises: at least one processor, configured to: couple to a memory, read an instruction in the memory, and execute the instruction to implement the method according to any one of claims 5 to 8, or claim 15.

34. The radio access network device according to claim 33, wherein the radio access network device further comprises the memory.

35. A terminal device, wherein the terminal device is specifically a first terminal device, and the first terminal device comprises: at least one processor, configured to: couple to a memory, read an instruction in the memory, and execute the instruction to implement the method according to any one of claims 9 to 14.

36. The terminal device according to claim 35, wherein the terminal device further comprises the memory.

37. A chip, wherein the chip comprises a processor, configured to support a first radio access network device in performing the method according to any one of claims 1 to 4, support a second radio access network device in performing the method according to any one of claims 5 to 8, or claim 15, or support a first terminal device in performing the method according to any one of claims 9 to 14.

38. The chip according to claim 36, wherein the chip further comprises a memory, and the memory is configured to store a program instruction and data of the first radio access network device, the second radio access network device, or the first terminal device.

39. A computer-readable storage medium, comprising an instruction, wherein when the instruction is run on a computer, the computer is enabled to perform the method according to any one of claims 1 to 15.

40. A computer program product comprising an instruction, wherein when the instruction is run on a computer, the computer is enabled to perform the method according to any one of claims 1 to 15.
